# EUROPÄISCHE PATENTANMELDUNG

(11) **EP 2 567 912 A2**
(43) Veröffentlichungstag der Anmeldung: **13.03.2013**
(21) Anmeldenummer: 12004069.6
(22) Anmeldetag: 25.05.2012
(51) Int. Cl.: B65F 1/02, B65F 1/14, B65F 1/16

(54) **Verfahren zur Entsorgung von Abfällen, Entsorgungseinrichtung sowie Deckelanordnung an einem Behälter, insbesondere an einem Abfall- und/oder Entsorgungsbehälter**

(30) Priorität: 27.05.2011 DE 102011102654; 16.12.2011 DE 102011121427
(71) Anmelder: AUTECO Unternehmens- und Organisationsberatung GmbH, 6370 Reith bei Kitzbühel (AT)
(72) Erfinder: Büchl, Reinhard, 85120 Hepberg (DE)
(74) Vertreter: Liebl, Thomas

(57) **Zusammenfassung**

Erfindungsgemäß ist eine Mehrzahl von ortsfesten, voneinander beabstandeten Bearbeitungsstationen (B1, B2) vorgesehen, an denen zu entsorgendes Material anfällt, wobei einem ersten Teil der ortsfesten Bearbeitungsstationen (B1) jeweils wenigstens ein, eine Befüllöffnung aufweisender Abfall- und/oder Entsorgungsbehälter (3) mit einem Deckel (2) zugeordnet ist, und wobei einem zweiten Teil der ortsfesten Bearbeitungsstationen (B2) jeweils wenigstens ein, eine Befüllöffnung aufweisender Abfall- und/oder Entsorgungsbehälter (3) ohne Deckel zugeordnet ist. Sämtliche Abfall- und/oder Entsorgungsbehälter (3) sind wenigstens bezüglich einer behälterseitigen Aufnahmevorrichtung für einen abnehmbaren Deckel (2) baugleich ausgebildet, die Deckel (2) sind wenigstens im Hinblick auf ihre lösbare Verbindung mit den behälterseitigen Aufnahmevorrichtungen ebenfalls baugleich ausgebildet.

## Beschreibung

Die Erfindung betrifft Verfahren zur Entsorgung von Abfällen nach dem Oberbegriff des Anspruchs 1, eine Entsorgungseinrichtung nach dem Oberbegriff des Anspruchs 4 sowie eine Deckelanordnung an einem Behälter, insbesondere an einem fahrbaren und/oder mittels einer Hub- und/oder Kippvorrichtung entleerbaren Abfall- und/oder Entsorgungsbehälter, nach dem Oberbegriff des Anspruchs 7.

Es ist allgemein bekannt, im Produktions- und/oder Montagebereich von Industrieunternehmen anfallende Abfälle in Behältern zu sammeln und für eine Wiederverwertung oder Beseitigung abzutransportieren. Dazu werden fahrbare, allgemein bekannte Normbehälter verwendet. Diese sind regelmäßig mit zwei gegenüberliegenden, etwa horizontal vom Behälter abstehenden Schwenkzapfen ausgerüstet, welche in ihrer Lage einer Aufnahmehalterung einer Hub- und/oder Kippvorrichtung zugeordnet und angepasst sind, wobei die Hub- und/oder Kippvorrichtungen regelmäßig auch als Normschüttungs-Vorrichtungen bezeichnet werden. Mittels einer solchen Hub- und/oder Kippvorrichtung oder dergleichen Vorrichtungen sind diese Normbehälter weitestgehend automatisiert entleerbar, in dem sie dort mit dem Schwenkzapfen eingehängt und mittels eines Antriebs gekippt und entleert werden.

Derartige Behälter sind beispielsweise aus der DE 299 13 948 U1 sowie aus der DE 20 2010 014 502 U1 bekannt.

In Verbindung mit derartigen Behältern bzw. auch mit nicht fahrbaren Entsorgungsbehältern sind diese teilweise mit und teilweise ohne Deckel ausgerüstet. Bei Behältern mit Deckel muss im geöffneten Zustand ein ergonomisches Befüllen des Behälters bzw. auch ein Entleeren des Behälters oder eine Entnahme aus dem Behälter möglich sein. Die Notwendigkeit eines Deckels kann sich aus vielerlei Gründen ergeben, zum Beispiel aus Gründen der Optik, aus hygienischen Gründen, zur Verhinderung eines Eintrages von Staub oder Feuchtigkeit, aus Sicherheitsaspekten oder aus Gründen des Brandschutzes.

Da die Notwendigkeit eines mit einem Deckel bzw. einer Abdeckung verschließbaren Behälters jedoch insbesondere in großen Industrieunternehmen, die eine Serienfertigung aufweisen, nicht an allen Bearbeitungsstationen gegeben ist, müssen vom Logistikdienstleister in diesem Fall zwei unterschiedliche Sätze von Behältern vorgehalten werden, nämlich zum einen Behälter mit einem Deckel und zum anderen Behälter ohne Deckel. Dies erschwert die Austauschlogistik der Behälter untereinander wesentlich, da im Rahmen der Austauschfahrten stets eine Mehrzahl von Behältern mit Deckel und von Behältern ohne Deckel mitgeführt werden müssen, um beim Anfahren der einzelnen Bearbeitungsstationen in einem Werk sicherzustellen, dass eine ausreichende Anzahl von Behältern mit Deckel und von Behältern ohne Deckel mitgeführt wird, um dann an den einzelnen Bearbeitungsstationen auch jeweils Behälter mit Deckel gegen einen Behälter mit Deckel tauschen zu können bzw. zum anderen Behälter ohne Deckel auch mit Behälter ohne Deckel tauschen zu können. In diesem Fall ist somit insgesamt stets eine Vielzahl von Behältern mit oder ohne Deckel mitzuführen, um die entsprechende Anzahl von Behältern vorzuhalten.

Zudem müssen bei einer derartigen Entsorgungslogistik bzw. Abhollogistik die Behälter mit und die Behälter ohne Deckel regelmäßig so im Zugverband aneinander gekoppelt sein, dass diese genau in der Reihenfolge der abzufahrenden Bearbeitungsstationen angeordnet sind. Außerordentliche Austauschaktionen, wie sie regelmäßig in Werken bzw. Industrieunternehmen mit mehreren unterschiedlichen Bearbeitungsstationen anfallen, führen daher zu erheblichen zusätzlichen Arbeiten und einem erheblichen logistischen Aufwand.

Dementsprechend ist es Aufgabe der vorliegenden Erfindung, ein Verfahren zur Entsorgung von Abfällen, insbesondere von Montageabfällen im Produktions- und/oder Fertigungsbereich von Industrieunternehmen, insbesondere von eine Serienfertigung aufweisenden Industrieunternehmen, vorzuschlagen, mittels der der logistische Aufwand beim Austausch der Behälter an unterschiedlichen Bearbeitungsstationen wesentlich vereinfacht werden kann, wobei gleichzeitig vorteilhaft die Anzahl der vorzuhaltenden Behälter reduziert werden kann.

Weiter ist es eine Aufgabe der vorliegenden Erfindung, eine Entsorgungseinrichtung bzw. ein Entsorgungssystem zur Durchführung eines derartigen Verfahrens vorzuschlagen.

Schließlich ist es eine weitere Aufgabe der vorliegenden Erfindung, eine Deckelanordnung an einem Behälter, insbesondere an einem fahrbaren und/oder mittels einer Hub- und/oder Kippvorrichtung entleerbaren Abfall- und/oder Entsorgungsbehälter, zur Verfügung zu stellen, der flexibel und vielfältigst einsetzbar ist und ein einfaches Befüllen bzw. Entleeren des Behälters gewährleisten soll.

Diese Aufgabe wird bezüglich des Verfahrens gelöst mit den Merkmalen des Patentanspruchs 1. Bezüglich der Entsorgungseinrichtung wird diese Aufgabe gelöst mit den Merkmalen des Patentanspruchs 4 und bezüglich der Deckelanordnung wird diese Aufgabe gelöst mit den Merkmalen des Patentanspruchs 7. Vorteilhafte Ausgestaltungen sind jeweils Gegenstand der hierauf rückbezogenen Unteransprüche.

Gemäß Anspruch 1 wird ein Verfahren zur Entsorgung von Abfällen, insbesondere von Montageabfällen im Produktions- und/oder Fertigungsbereich von Industrieunternehmen, insbesondere von eine Serienfertigung aufweisenden Industrieunternehmen, vorgeschlagen, bei dem eine Mehrzahl von ortsfesten, voneinander beabstandeten Bearbeitungsstationen vorgesehen ist, an denen zu entsorgendes Material anfällt. Einem ersten Teil der ortsfesten Bearbeitungsstationen ist hier jeweils ein, eine Befüllöffnung aufweisender Abfall- und/oder Entsorgungsbehälter mit einem Deckel zugeordnet, mittels dem eine Befüllöffnung des Behälters verschließbar ist. Einem zweiten Teil der ortsfesten Bearbeitungsstationen ist dagegen wenigstens jeweils ein, eine Befüllöffnung aufweisender Abfall- und/oder Entsorgungsbehälter ohne Deckel zum Verschließen der Befüllöffnung zugeordnet.

Erfindungsgemäß ist vorgesehen, dass sämtliche Abfall- und/oder Entsorgungsbehälter wenigstens bezüglich einer behälterseitigen Aufnahmevorrichtung für einen abnehmbaren Deckel (mit dem die Befüllöffnung im montierten Zustand des Deckels verschließbar ist) baugleich ausgebildet sind. Dabei ist wenigstens ein, vorzugsweise eine Mehrzahl von abnehmbaren Deckeln vorgesehen, die wenigstens im Hinblick auf ihre lösbare Verbindung mit den behälterseitigen Aufnahmevorrichtungen ebenfalls baugleich ausgebildet sind. Weiter erfindungsgemäß ist lediglich an dem ersten Teil der ortsfesten Bearbeitungsstationen (das heißt an denjenigen Bearbeitungsstationen, an denen der wenigstens eine dortige Abfall- und/oder Entsorgungsbehälter mit einem Deckel versehen werden soll) wenigstens ein abgenommener Deckel vorgesehen bzw. angeordnet. Das heißt, dass an dem zweiten Teil der ortsfesten Bearbeitungsstationen (an dem der wenigstens eine dortige Abfall- und/oder Entsorgungsbehälter nicht mit einem Deckel zu verschließen ist) "deckelfrei" ausgebildet ist und somit dort kein abnehmbarer Deckel vorgehalten wird. Dadurch wird erreicht, dass in einem ersten Schritt wenigstens ein beliebiger der leeren Abfall- und/oder Entsorgungsbehälter (zum Beispiel nach dem Entleeren) an die jeweiligen ortsfesten Bearbeitungsstationen verbracht und dort gegen den wenigstens einen mit zu entsorgendem Material befüllten, abzuholenden Abfall- und/oder Entsorgungsbehälter ausgetauscht werden kann. Dabei ist insbesondere vorgesehen, dass der Deckel an denjenigen ortsfesten Bearbeitungsstationen, an denen der wenigstens eine Abfall- und/oder Entsorgungsbehälter mit einem Deckel verschließbar sein soll, von dem wenigstens einen abzuholenden Abfall- und/oder Entsorgungsbehälter abgenommen und dann anschließend auf einen angelieferten, leeren Abfall- und/oder Entsorgungsbehälter montiert wird, so dass der wenigstens eine an der Bearbeitungsstation verbleibende Abfall- und/oder Entsorgungsbehälter zu den Zeiten, zu denen keine Behälterbefüllung mit einem zu entsorgendem Material erfolgt, mittels des aufmontierten Deckels verschlossen werden kann.

Es versteht sich, dass im Rahmen des Deckelaustauschs selbstverständlich vorgesehen sein kann, dass dieser Deckel zuerst an der Bearbeitungsstation abgelegt und erst zu einem späteren Zeitpunkt montiert wird, zum Beispiel nachdem eine erste Befüllung des Abfall- und/oder Entsorgungsbehälters mit dem zu entsorgendem Material erfolgt ist. Dies soll ausdrücklich mit vom Schutzumfang umfasst sein.

Die abgeholten Abfall- und/oder Entsorgungsbehälter werden zu einer Entsorgungseinrichtung verbracht, an der diese entleert werden. Danach können die entleerten Abfall- und/oder Entsorgungsbehälter wiederum in beliebiger Reihenfolge an die ortsfesten Bearbeitungsstationen verbracht werden, und zwar unabhängig davon, ob es sich hierbei um eine Bearbeitungsstation "mit" oder "ohne" Deckel handelt.

Mit einer derartigen erfindungsgemäßen Verfahrensführung wird somit vorteilhaft erreicht, dass vom Entsorgungsdienstleister im Werk bzw. im Industrieunternehmen nur noch offene Behälter bereitgehalten werden müssen, die in beliebiger Reihenfolge an die jeweiligen unterschiedlichen Bearbeitungsstationen verbracht und dort ausgetauscht werden können, da durch die erfindungsgemäße Lösung sichergestellt ist, dass der abnehmbare Deckel vor Ort jeweils dafür vorgesehenen Bearbeitungsstationen bereitgehalten wird und somit der Deckelaustausch jeweils vor Ort an der jeweiligen Bearbeitungsstation erfolgen kann. Der Aufwand der Austauschlogistik wird somit hier wesentlich verringert bzw. vereinfacht, so dass im Rahmen der Entsorgung weniger Fehlfahrten auftreten und auch weniger fehlerhafte Behälteraustausche erfolgen.

Des Weiteren wird dadurch auch auf einfache Weise sichergestellt, dass zum Beispiel in einer besonders bevorzugten Ausgestaltung nur noch eine Art von baugleichen Behältern vorgehalten werden muss. Grundsätzlich können die Behälter aber selbst auch unterschiedlich ausgebildet sein, zum Beispiel unterschiedliche Höhen und Behältervolumina aufweisen. Durch die erfindungsgemäße Lösung ist jedoch sichergestellt, dass an jedem dieser Abfall- und/oder Entsorgungsbehälter der an den jeweiligen Bearbeitungsstationen verbleibende Deckel lösbar montiert werden kann, so dass die erfindungsgemäßen Vorteile erzielt werden. Insgesamt sind somit aufgrund der erfindungsgemäßen Lösung wesentlich weniger Tauschbehälter erforderlich.

Um sicherzustellen, dass kein zu entsorgendes Material während des Transportes von den Bearbeitungsstationen weg verloren gehen kann, wird gemäß einer besonders bevorzugten Ausgestaltung vorgeschlagen, dass die Abfall- und/oder Entsorgungsbehälter während der Fahrt von den Bearbeitungsstationen weg bzw. gegebenenfalls auch zu den Bearbeitungsstationen hin (zum Beispiel Schutz vor Schnee, Wasser, etc.) mittels einer Abdeckung als Transportsicherung, insbesondere einer folien- und/oder planenartigen- und/oder netzartigen Abdeckung, abgedeckt werden, die in ihrer Nicht-Gebrauchsposition vorzugsweise am Zugfahrzeug und/oder am jeweiligen Behälter verstaut ist. Hierbei kann es sich zum Beispiel um eine einfache Plane handeln, die über die Befüllöffnung gespannt wird und zum Beispiel dort eingehängt wird. Beispielsweise kann eine derartige Abdeckung als einer Art Rolloanordnung ausgezogen werden. Selbstverständlich kann aber auch eine Einhakverbindung am Ausgangspunkt vorgesehen sein, von der ausgehend dann die Abdeckung über die Behälteröffnung auf die andere Seite gezogen wird. Auch eine vollkommen vom Behälter getrennte Lösung ist möglich, bei der zum Beispiel die Abdeckung am Zugfahrzeug verstaut ist und vom Zugfahrzeugführer dann die Plane entsprechend am Behälter eingehakt und über die Behälteröffnung gezogen wird.

Grundsätzlich gibt es verschiedene Möglichkeiten, wie die Behälter zu den einzelnen Bearbeitungsstationen verbracht werden können. Bevorzugt sind hierbei diejenigen Ausgestaltungen, bei denen die Behälter im Zugverband zusammengekoppelt zu den Bearbeitungsstationen hin und von den Bearbeitungsstationen weg verfahren werden, indem diese von einem Zugfahrzeug gezogen werden. Dabei können die Behälter selbst fahrbar ausgebildet sein, das heißt zum Beispiel an der Behälterunterseite entsprechende Rollen aufweisen. Alternativ dazu kann aber auch vorgesehen sein, dass die Behälter selbst nicht fahrbar ausgebildet sind und dementsprechend auf entsprechenden fahrbaren Untersetzern oder fahrbaren Trailern angeordnet bzw. aufgesetzt sind.

Bezüglich der Entsorgungseinrichtung gemäß Anspruch 4 ergeben sich die gleichen Vorteile, wie sie zuvor bereits ausführlich dargelegt worden sind. Insofern wird hier auf die zuvor gemachten Ausführungen verwiesen.

Gemäß Anspruch 7 wird eine Deckelanordnung an einem Behälter, insbesondere an einem fahrbaren und/oder mittels einer Hub- und/oder Kippvorrichtung entleerbaren Abfall- und/oder Entsorgungsbehälter, vorgeschlagen, bei der der Behälter wenigstens eine Behälterwand aufweist, die wenigstens einen, nach oben offenen und über eine Zugangsöffnung zugänglichen Aufnahmeraum umgibt bzw. begrenzt, der mittels eines Deckels verschließbar ist. Erfindungsgemäß ist der Deckel abnehmbar und mehrteilig ausgebildet und weist wenigstens zwei in einem Angrenzungsbereich aneinandergrenzende Deckelteile auf, die mittels wenigstens einer Schwenkgelenkeinrichtung relativ zueinander verschwenkbar ausgebildet sind, wobei wenigstens eines der relativ zueinander verschwenkbaren Deckelteile als Fixier-Deckelteil mittels wenigstens einer Fixiereinrichtung lösbar am Behälter festlegbar ist. Weiter ist erfindungsgemäß vorgesehen, dass bei einem mittels der Fixiereinrichtung am Behälter festgelegtem Deckelteil das wenigstens eine andere Deckelteil zur Freigabe der Zugangsöffnung klappenartig aufschwenkbar ist und dass bei gelöster Fixiereinrichtung der gesamte Deckel vom Behälter abnehmbar ist.

Mit einem derartigen mehrteilig ausgebildeten, abnehmbaren Deckel wird zum einen eine zuverlässige und funktionssichere Fixierung des Deckels insgesamt am Behälter ermöglicht, wobei durch die relative Verschwenkbarkeit der Deckelteile zueinander gleichzeitig sichergestellt ist, dass durch einfaches Aufschwenken eines der Deckelteile ein einfacher Zugang zu dem Aufnahmeraum des Behälters sichergestellt ist. Hierzu ist bevorzugt vorgesehen, dass wenigstens eines der Deckelteile relativ großflächig ausgebildet ist, so dass ein möglichst ungehinderter freier Zugang zum gesamten Aufnahmeraum freigegeben ist, der zum einen ein einfaches Befüllen des Behälters und zum anderen auch ein einfaches Entleeren des Behälters ermöglicht.

Insbesondere in Verbindung mit im Bereich der industriellen Entsorgungslogistik eingesetzten Behältern, bei denen es sich bevorzugt um fahrbare und/oder mittels einer Hub- und/oder Kippvorrichtung entleerbare Abfall- und/oder Entsorgungsbehälter handelt, kann somit der Behälter, wie bereits zuvor dargelegt, zum Beispiel beim Transport im Zugverband mittels einer Zugmaschine, abgenommen und somit der Behälter auch ohne Deckel verwendet bzw. verfahren werden. Der abgenommene Deckel verbleibt dann zum Beispiel an der jeweiligen Bearbeitungs- und/oder Befüllungsstation im Werk selbst und kann dann vom Werker bzw. Zugmaschinenführer beim Wiederanliefern eines leeren Behälters einfachst wieder aufmontiert werden. Dadurch brauchen Deckel lediglich dort vorgehalten werden, wo dies nötig ist, zum Beispiel an Bearbeitungsstationen mit geruchsintensiven Abfällen. Zudem sind aufgrund dieser erfindungsgemäßen ab- bzw. aufmontierbaren Deckellösung insgesamt wesentlich weniger Tauschbehälter erforderlich.

Gemäß einer besonders bevorzugten konkreten Ausgestaltung wird weiter vorgeschlagen, dass die wenigstens eine Schwenkgelenkeinrichtung eine Halteeinrichtung aufweist, die wenigstens ein in die geöffnete Stellung verschwenktes Deckelteil in der Offenstellung hält, wobei bevorzugt vorgesehen ist, dass die wenigstens eine Schwenkgelenkeinrichtung eine Halteeinrichtung, vorzugsweise eine einzige Halteeinrichtung, aufweist, die im Angrenzungsbereich an beiden einander zugeordneten Deckelteilen angreift und das wenigstens eine Deckelteil im aufgeschwenkten und/oder geöffneten Zustand in dessen Offenstellung hält. Die Halteeinrichtung ist bevorzugt so ausgebildet, dass diese eine Zugkraft auf das wenigstens eine Deckelteil in Richtung dessen Offenstellung ausübt.

Dadurch ist sichergestellt, dass das Deckelteil bzw. gegebenenfalls auch beide Deckelteil im aufgeschwenkten Zustand funktionssicher in der Offenposition gehalten wird bzw. werden, wodurch ein ungehindertes Entleeren und Befüllen sichergestellt wird. Die Halteeinrichtung selbst kann grundsätzlich auf unterschiedlichste Art und Weise ausgebildet werden, wobei bevorzugt vorgesehen ist, dass die Halteeinrichtung durch ein Zugkraftelement, bevorzugt durch ein im Angrenzungsbereich an den einander zugeordneten Deckelteilen angreifendes Zugkraftelement, bevorzugt ein einziges Zugkraftelement, gebildet ist, welches das geöffnete Deckelteil bzw. auch die geöffneten Deckelteile mit einer solchen Zugkraft beaufschlagt, dass diese funktionssicher in ihrer Offenstellung gehalten werden. Die Begrifflichkeit Zugkraftelement ist hier ausdrücklich in einem weiten Sinne zu verstehen und umfasst nicht nur die bevorzugten Federelemente, wie beispielsweise Zugfederelemente, sondern ausdrücklich auch solche Lösungen, die das gleiche Ergebnis bewirken, also zum Beispiel Zylinder-Kolben-Einheiten, Spindel-Aktuatoren-Lösungen oder dergleichen mehr, die bei einer entsprechenden Betätigung eine Zugkraft im Sinne einer Haltekraft auf das wenigstens eine Deckelteil ausüben können.

Gemäß einer weiteren besonders bevorzugten Ausgestaltung wird vorgeschlagen, dass das Zugkraftelement konkret durch eine Zugfeder gebildet ist, die in einer in Abhängigkeit von einem Aufschwenkwinkel des aufgeschwenkten Deckelteils definierten Übertotpunktstellung eine Zugkraft auf das Deckelteil ausübt, die größer ist als die das Deckelteil in die Schließstellung ziehende Gewichtskraft des Deckelteils, so dass das Deckelteil in der Offenposition gehalten ist. Weiter kann in Verbindung mit einer derartigen Zugfeder vorgesehen sein, dass diese in einer Untertotpunktstellung eine Zugkraft auf das Deckelteil ausübt, die kleiner ist als die das Deckelteil in die Schließstellung ziehende Gewichtskraft des Deckelteils bzw. kleiner ist als eine das zugeordnete Deckelteil in der zum Beispiel Schließstellung haltende Fixierkraft oder Haltekraft oder dergleichen, so dass das Deckelteil in der Schließstellung verbleibt. Eine derartige konkrete Lösung mit einer Zugfeder ist besonders funktionssicher und zudem auch preiswert in der Herstellung, da hier ohne großen Bauteilaufwand und ohne zusätzliche Hilfsenergieeinrichtungen die gewünschte Zugkraft- und Haltefunktion im Hinblick auf das wenigstens eine Deckelteil in der gewünschten Weise aufgebracht werden kann.

Um ein zuverlässiges Verschwenken der einander zugeordneten Deckelteile zu gewährleisten umfasst die Schwenkgelenkeinrichtung weiter bevorzugt eine Scharnieranordnung mit einem jedem Deckelteil zugeordneten Scharnierteil, wobei die Scharnierteile schwenkbar miteinander verbunden sind. Es versteht sich, dass selbstverständlich mehrere derartige, vorzugsweise voneinander beabstandete Scharniergelenke eine Scharnieranordnung für die einander zugeordneten und relativ zueinander verschwenkbaren Deckelteile ausbilden können.

Gemäß einer weiteren besonders bevorzugten konkreten Ausgestaltung der vorliegenden Erfindungsidee wird vorgeschlagen, dass jedem der Deckelteile im Angrenzungsbereich derselben ein Bestandteil der Schwenkgelenkeinrichtung bildender Gelenkbeschlag zugeordnet ist. Dabei ist konkret vorgesehen, dass an einem ersten der Gelenkbeschläge, der einem ersten Deckelteil zugeordnet ist, ein, eine Führungskulisse aufweisendes Schwenkelement, das bevorzugt durch eine Schwenkplatte oder dergleichen gebildet ist, schwenkbar angelenkt ist, wobei in die Führungskulisse des Schwenkelementes ein Führungszapfen des zweiten der Gelenkbeschläge, der einem zweiten Deckelteil zugeordnet ist, eingreift und darin zwangsgeführt ist. An diesen Gelenkbeschlägen, die jeweils unterschiedlichen Deckelteilen zugeordnet sind, kann dann zum Beispiel auf besonders einfache und funktionsintegrierte Art und Weise das vorstehend beschriebene Zugkraftelement bzw. die Halteeinrichtung angebunden werden, das bzw. die für wenigstens eines der Deckelteile, bevorzugt für beide einander zugeordneten Deckelteile, die gewünschte Haltekraft in deren Offenstellungen aufbringt.

Es handelt sich somit hierbei insgesamt um einen wenig bauteilintensiven Aufbau, der ein einfaches und funktionssicheres Verschwenken, Abnehmen und auch Wiederaufsetzen des gesamten Deckels ermöglicht, wobei insbesondere durch das Vorsehen des schwenkbar angelenkten und eine Führungskulisse aufweisenden Schwenkelementes, in dem ein Führungszapfen geführt ist, ein Verschwenken der Deckelteile (neben einem funktionssicheren Verschwenken der Deckelteile in die gewünschten Positionen in einem definierten Schwenkbereich) sichergestellt werden kann, dass die Deckelteile bei gelöster Fixiereinrichtung zum Abnehmen des gesamten Deckels funktionssicher außer Eingriff mit dem behälterseitigen Rastelement gehalten werden, was nachfolgend noch näher erläutert wird. Insgesamt handelt es sich somit hier bei einer derartigen konkreten Ausgestaltung einer Schwenkgelenkeinrichtung um ein einfach herstellbares, funktionssicher bedienbares Bauteil, das eine funktionssichere Betätigung des Deckels bzw. der einzelnen Deckelteile beim Öffnen bzw. Schließen der Deckelteile als auch beim Aufsetzen und beim Abnehmen des Deckels insgesamt zur Folge hat.

In Verbindung mit der Fixiereinrichtung hat es sich als besonders vorteilhaft erwiesen, dass das wenigstens eine mittels der Fixiereinrichtung lösbar am Behälter festlegbare Fixier-Deckelteil ein Rastelement aufweist, das im fixierten Zustand des Deckelteils mit einem behälterseitigen Rastgegenelement zusammenwirkt, wobei das Rastelement bei gelöster Fixiereinrichtung und aufgeschwenktem Fixier-Deckelteil außer Eingriff mit dem Rastgegenelement ist. Eine derartige Rastelement/Rastgegenelement-Rastverbindung kann auf einfache und funktionssichere Weise mit wenig Bauteilaufwand umgesetzt und realisiert werden und ermöglicht zudem eine funktionssichere Festlegung des Deckelteils bzw. des gesamten Deckels am Behälter, wobei zudem auch gleichzeitig eine einfache Lösbarkeit derartiger Verbindungen umgesetzt werden kann. Gemäß einer hierzu besonders bevorzugten Ausgestaltung ist vorgesehen, dass die Schwenkgelenkeinrichtung so ausgebildet ist, dass das Fixier-Deckelteil im aufgeschwenkten Zustand in der Offenstellung gehalten ist. Dieses Halten kann grundsätzlich auf unterschiedliche Art und Weise erfolgen, wobei, wie bereits zuvor erörtert, besonders bevorzugt vorgesehen ist, dass für sämtliche einander zugeordneten Deckelteile jeweils eine einzige Halteeinrichtung bzw. ein Zugkraftelement, insbesondere ein Federelement oder dergleichen vorgesehen ist. Damit ist sichergestellt, dass auf funktionsintegrierte Weise eine einzige Halteeinrichtung bzw. ein Zugkraftelement pro Schwenkgelenkeinrichtung für mehrere Deckelteile verwendet werden kann.

Gemäß einer alternativen oder zusätzlichen Ausgestaltung wird vorgeschlagen, dass der Führungszapfen in der aufgeschwenkten Stellung des Fixier-Deckelteils in eine führungskulissenseitige Rastnut einrastet, aus der der Führungszapfen beim Aufschwenken des Fixier-Deckelteils in Richtung dessen Schließstellung wieder ausrastet. Mit einer derartigen Ausgestaltung wird auf einfache Weise zusätzlich zur Haltekraft der Halteeinrichtung sichergestellt, dass das Fixier-Deckelteil auf funktionssichere Weise in der Offenstellung gehalten wird und somit funktionssicher außer Eingriff mit dem Rastgegenelement gehalten wird, was das einfache und zuverlässige Abnehmen des gesamten Deckels ermöglicht.

In Verbindung mit der zuvor beschriebenen konkreten Ausgestaltung des Deckels mitsamt Deckelteilen und Schwenkgelenkeinrichtung ist es grundsätzlich möglich, zum Beispiel eines der Deckelteile nach oben aufzuklappen und nach Lösen der Fixiereinrichtung den Deckel von unten her, das heißt kopfüber zu ergreifen, zum Beispiel an, an der Deckelunterseite montierten Haltegriffen zu ergreifen, um den Deckel von in der Regel in etwa mannshohen Behältern abzuheben. Falls derartige Überkopf-Arbeiten jedoch zum Beispiel aufgrund arbeitssicherheitstechnischer Aspekte unerwünscht sein sollten, besteht mit der erfindungsgemäßen Deckellösung auch noch eine andere bevorzugte Abnahmemöglichkeit, gemäß der sich der Deckel bei gelöster Fixiereinrichtung und/oder aufgeschwenktem Fixier-Deckelteil auf dem die Zugangsöffnung begrenzenden Behälterwand-Randbereich in einer Anlage- und Gleitverbindung aufliegt und/oder abstützt und entlang des eine Art Führungsschiene ausbildenden Behälterwand-Randbereiches zur Freigabe der Zugangsöffnung verlagerbar bzw. verschiebbar bzw. verfahrbar ist. Dadurch ist sichergestellt, dass der Deckel einfachst bei gelöster wenigstens einer Fixiereinrichtung zum Beispiel nach vorne hin, das heißt zum Werker hin, vom Behälter abgezogen werden kann.

In diesem Zusammenhang hat es sich als besonders vorteilhaft erwiesen, dass das fixierdeckelteilseitige Rastelement in einer vorteilhaften Doppelfunktion durch ein Dreh- und/oder Gleitelement, insbesondere durch eine am Fixier-Deckelteil drehbar gelagerte, zylindrische Rolle (zum Beispiel in der Art eines Wälzkörpers eines Nadellagers) gebildet ist, das mit einer behälterseitigen Rastnut als Rastgegenelement zusammenwirkt und das im aufgeschwenkten Zustand des Fixier-Deckelteils außer Eingriff mit der Rastnut ist und/oder das bei der Verlagerung des Deckels am Behälterwand-Randbereich entlang gleitet und/oder abrollt. Mit einer derartigen Maßnahme wird somit das Abziehen des Deckels mit einem relativ geringen Kraftaufwand möglich, was insbesondere bei großflächigen Deckeln von großvolumigen industriell eingesetzten Entsorgungsbehältern von Vorteil ist.

Gemäß einer weiteren besonders bevorzugten Ausgestaltung wird vorgeschlagen, dass dem fixierdeckelteilseitigen Rastelement im, in Abhebe- und/oder Verschieberichtung endseitigen und/oder dem behälterseitigen Rastgegenelement gegenüberliegenden vorderen Behälterbereich ein weiteres behälterseitiges Rastgegenelement zugeordnet ist, in den das Rastelement am Ende des Verlagerungsweges dergestalt eingehängt werden kann, dass der gesamte Deckel um diesen Einhängebereich als Schwenkachse, in Hochachsenrichtung des Behälters gesehen, verschwenkt werden kann, und zwar insbesondere nach unten abgeschwenkt werden kann, so dass der Deckel vom Werker nicht kopfüber hantiert werden muss, sondern von vorne frontal ergriffen werden kann, zum Beispiel an auf der Deckeloberseite montierten Handgriffen ergriffen werden kann. Die eben geschilderte bevorzugte konkrete Ausgestaltung mitsamt Einhängebereich eignet sich aber ebenso gut für das Aufsetzen des Deckels, weil hierdurch dann sichergestellt werden kann, dass der Deckel auf einfache Weise auch wieder in der richtigen Position am Behälter angesetzt werden kann. Anschließend kann dann durch einfaches Aufschwenken und nach hinten Schieben des Deckels dieser wieder in der gewünschten Position mittels der wenigstens einen Fixiereinrichtung verrastet werden. Um sicherzustellen, dass der so eingehängte Deckel nach dem Aufschwenken auch wieder nach hinten verschoben werden kann, ist sicherzustellen, dass die deckelseitigen Rastelemente außer Eingriff mit dem weiteren behälterseitigen Rastgegenelement gelangen. Hierzu sind den deckelseitigen Rastelementen bevorzugt Abstützelemente zugeordnet, die bei einem Aufschwenken des Deckels in dessen Horizontalposition zum einen den Deckel am jeweils zugeordneten Behälterwand-Randbereich abstützen und/oder halten und zum anderen bewirken, dass das Rastelement funktionssicher außer Eingriff mit dem weiteren behälterseitigen Rastgegenelement gelangt und somit der Deckel einfach und behinderungsfrei nach hinten in dessen gewünschte Raststellung verschoben werden kann.

Für eine besonders funktionssichere Fixierung des jeweiligen Fixier-Deckelteils ist bevorzugt vorgesehen, dass die Fixiereinrichtung zudem einen am Behälter schwenkbar gelagerten Rasthaken aufweist, der bei mit dem Rastgegenelement in Eingriff stehendem Rastelement das Rastelement hakenartig umgreift und in der Rastposition sowie im Eingriff mit dem Rastgegenelement hält. Ein derartiger Rasthaken ist besonders einfach und bedienerfreundlich und ermöglicht somit eine funktionssichere Festlegung des Deckels bzw. des jeweiligen Deckelteils am Behälter. Der bauliche Aufwand ist zudem so gering, dass dieser preisgünstig in der Herstellung ist.

Gemäß einer weiteren besonders bevorzugten Ausgestaltung der vorliegenden Erfindungsidee wird vorgeschlagen, dass die Führungskulisse einen in der Schließstellung des Deckels in etwa in Deckellängsrichtung verlaufenden Führungskulissenteil aufweist, der so gegen die Längsrichtung geneigt ist, dass der Führungszapfen das Schwenkelement, vorzugsweise eine Schwenkplatte, beim Aufschwenken des jeweiligen Deckelteils, vorzugsweise des den Führungszapfen tragenden Deckelteils, zur Vermeidung einer Kollision zwischen dem aufschwenkenden Deckelteil und dem Schwenkelement ebenfalls aufschwenkt. Alternativ oder zusätzlich hierzu kann weiter vorgesehen sein, dass die Führungskulisse einen in der Schließstellung des Deckels in etwa senkrecht ausgerichteten Führungskulissenteil aufweist, der so gegen die Hochachse geneigt ist, dass das Schwenkelement, insbesondere eine Schwenkplatte, am Ende des Schließvorgangs des Deckelteils, insbesondere des den Führungszapfen tragenden Deckelteils, in eine definierte, bezogen auf die Führungskulisse, mittlere und/oder nicht endseitige Position verlagert ist. Dadurch ist sichergestellt, dass der Führungszapfen in seiner Einstellung nicht auf Block geht. Gleichzeitig kann diese Maßnahme bei der Montage als Indikator für die Grundstellung dienen. In diesem Bereich kann die Führungskulisse zudem so ausgebildet sein, dass der Führungszapfen in einer Schließstellung der aneinandergrenzenden Deckelteile mit einer definierten Klemmkraft in der Führungskulisse gehalten ist, was unter anderem dazu beiträgt, einen möglichst klapperfreien Aufbau zur Verfügung zu stellen.

Gemäß einer bevorzugten konkreten Ausgestaltung ist der Deckel zweiteilig mit einem ersten bzw. hinteren und einem zweiten bzw. vorderen Deckelteil ausgebildet, wobei das erste bzw. hintere Deckelteil als Fixier-Deckelteil mittels der Fixiereinrichtung lösbar am Behälter festlegbar ist und/oder bezüglich seiner Abmessung kleiner ausgebildet ist als das zweite bzw. vordere Deckelteil. Damit ergeben sich auf besonders bauteiltechnisch einfache Weise die zuvor in Verbindung mit einem mehrteiligen Deckelaufbau beschriebenen Vorteile. Besonders bevorzugt ist dabei vorgesehen, dass das zweite bzw. vordere Deckelteil eine L-Form aufweist und in der Schließstellung ferner einen im vorderen Seitenwandbereich des bevorzugt rechteckförmigen Behälters ausgebildeten Seitenwandausschnitt abdeckt. Ein derartiger Seitenwandausschnitt ermöglicht ein einfacheres Befüllen als lediglich eine obere Zugangsöffnung. Zudem kann die L-Form des Deckelteils, insbesondere in Verbindung mit mannshohen Behältern, gewährleisten, dass dort zum Beispiel ein Handgriff oder dergleichen angebracht werden kann, der von einem Werker einfachst ergriffen und zur Betätigung des Deckelteils, zum Beispiel beim Hochklappen oder Abschwenken desselben, ergriffen werden kann.

Für einen klapperfreien Aufbau bzw. für einen dichten Aufbau ist desweiteren bevorzugt vorgesehen, dass im Angrenzungsbereich der relativ zueinander verlagerbaren Deckelteile ein Dicht- und/oder Dämpfungselement, vorzugsweise aus einem Elastomermaterial, angeordnet ist.

Um ein besonders funktionssicheres Verschwenken der Deckelteile sicherzustellen ist des Weiteren, insbesondere in Verbindung mit großflächigen Deckeln vorgesehen, dass auf der Deckeloberseite mehrere voneinander beabstandete Schwenklagereinrichtungen entlang der durch diese definierten Schwenkachse angeordnet sind.

Des Weiteren behält sich die Anmelderin ausdrücklich die Formulierung von Ansprüchen vor, die einen abnehmbaren Deckel für eine Deckelanordnung beanspruchen, wie sie vorstehend beschrieben worden ist.

Die Erfindung wird nachfolgend anhand einer Zeichnung näher erläutert.

Es zeigen:
- Fig. 1: schematisch eine perspektivische Ansicht einer erfindungsgemäßen Deckelanordnung an einem fahrbaren Entsorgungsbehälter,
- Fig. 2: schematisch eine Seitenansicht des Entsorgungsbehälters gemäß Fig. 1 bei geschlossenem Deckel,
- Fig. 3: den Deckel der Deckelanordnung gemäß Fig. 1 und 2 in einer perspektivischen Draufsicht,
- Fig. 4: den Deckel der Deckelanordnung gemäß Fig. 1 und 2 in einer schematischen, perspektivischen Unteransicht,
- Fig. 5 bis 22: unterschiedliche Funktionsstellungen des Deckels sowie der Deckelteile mitsamt einer ersten Möglichkeit einer Deckelabnahme,
- Fig. 23 bis 29: schematisch eine alternative Abnahmemöglichkeit des Deckels,
- Fig. 30: schematisch in den Fig. 30a bis 30b die erfindungsgemäße Verfahrensführung.

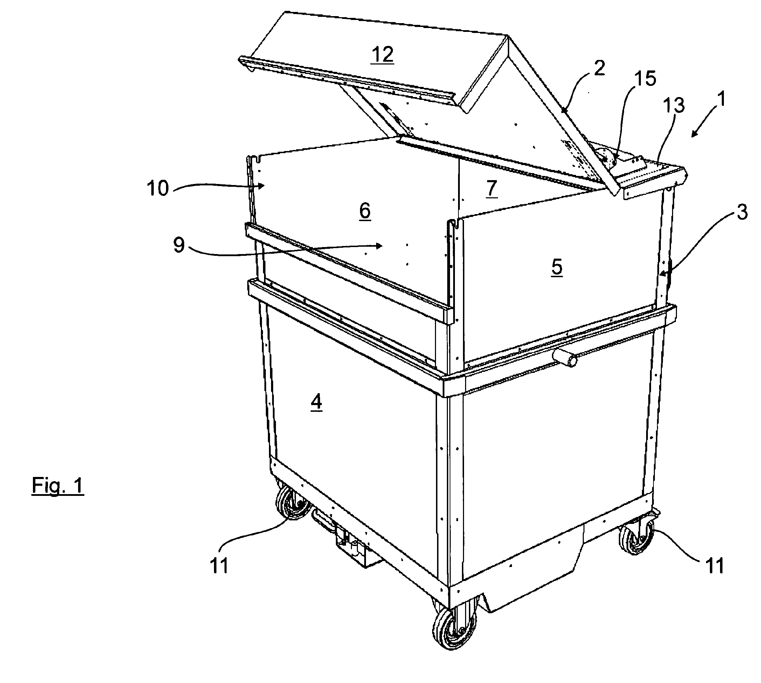

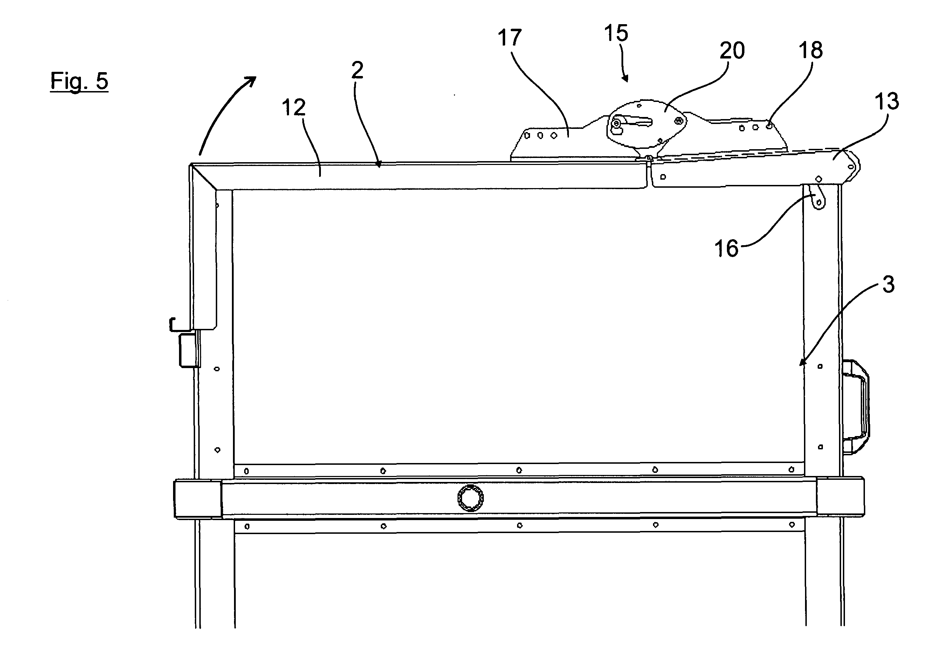

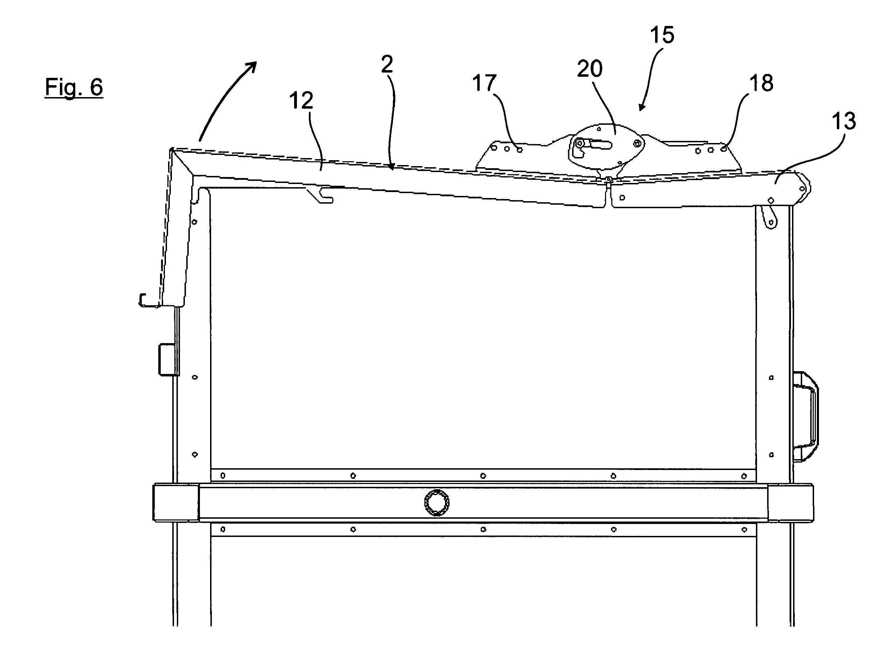

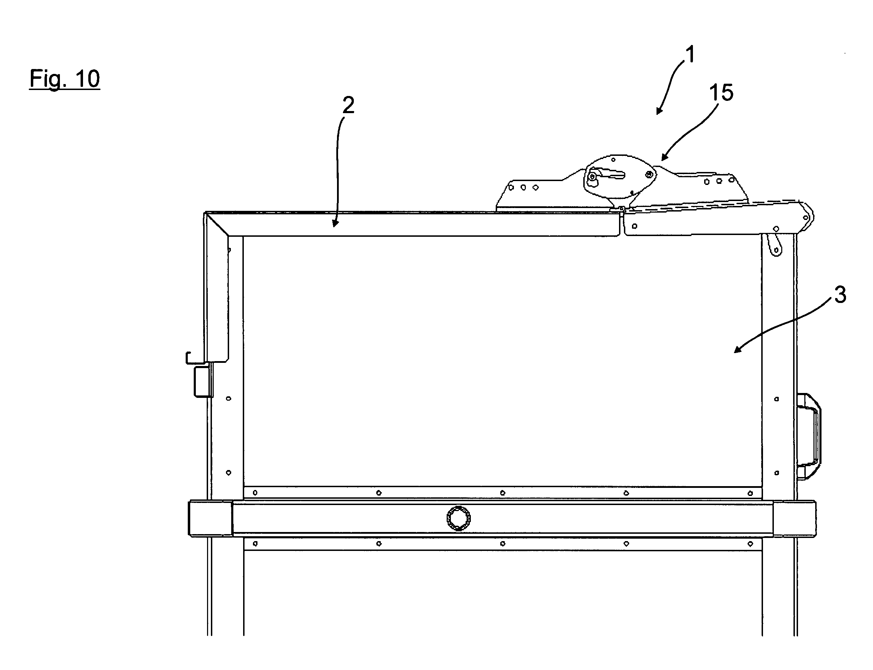

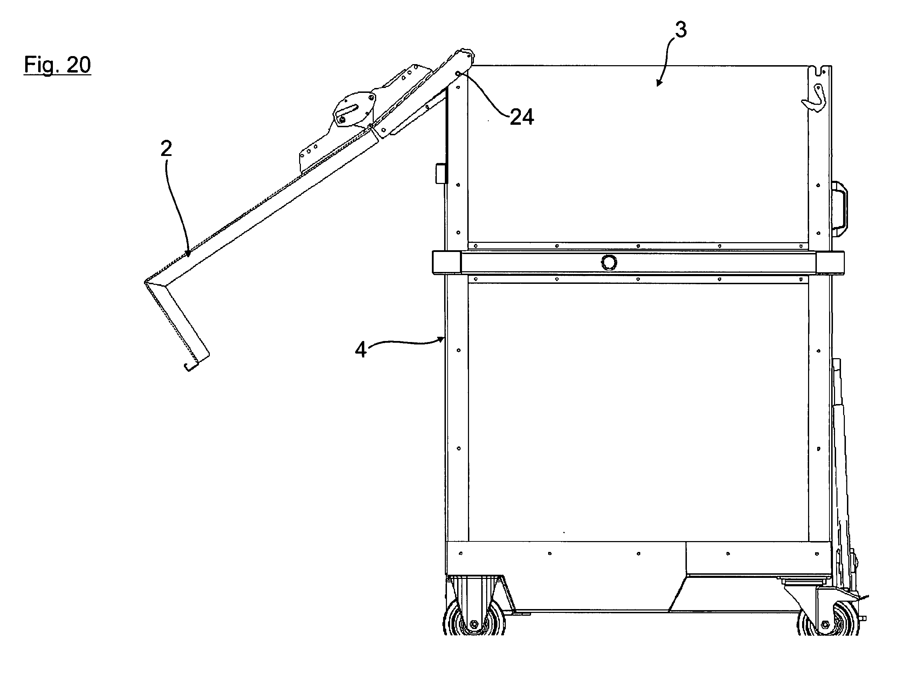

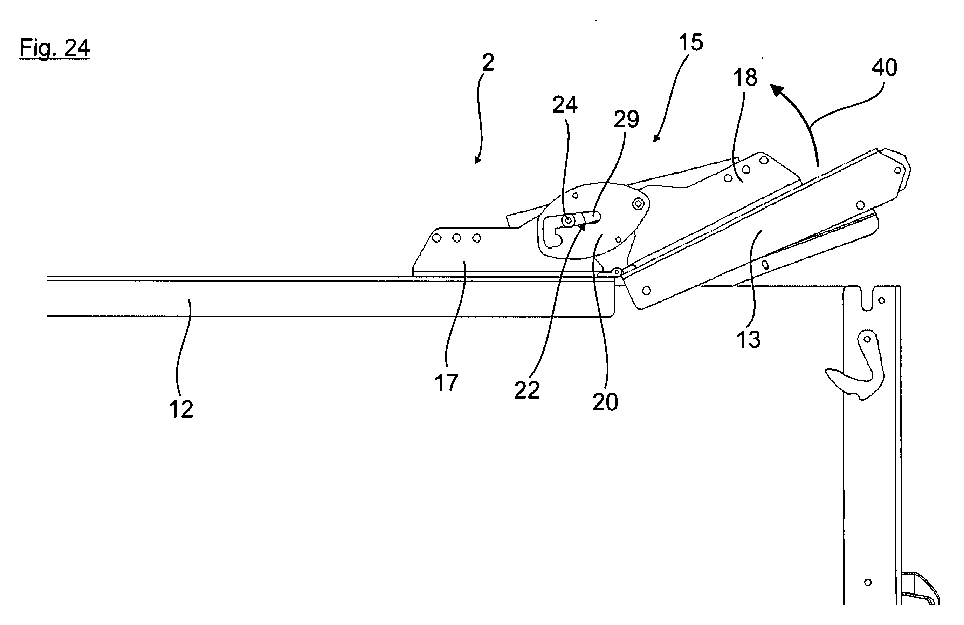

Der grundsätzliche prinzipielle Aufbau der erfindungsgemäßen Deckelanordnung wird nachfolgend anhand der Fig. 1 bis 4 sowie weiter auch anhand der Fig. 5 bis 29 anhand eines konkreten Beispiels beschrieben.

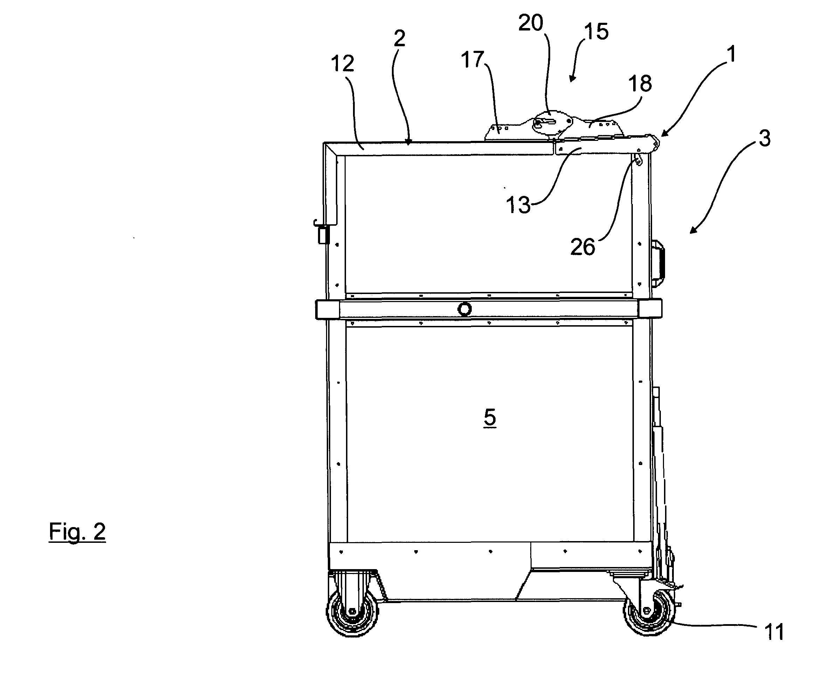

Wie dies insbesondere der Fig. 1 zu entnehmen ist, umfasst die dort gezeigte Deckelanordnung 1 einen Entsorgungsbehälter 3, der im Wesentlichen so aufgebaut ist, wie er insbesondere in der Fig. 2 der DE 20 2010 014 502 U1, deren Offenbarungsgehalt ausdrücklich auch zum Gegenstand der vorliegenden Beschreibung gemacht wird, beschrieben ist. Ein derartiger rechteckförmiger Entsorgungsbehälter 3 weist hier vier mehr oder weniger im rechten Winkel zueinander angestellte Seitenwände 4 bis 7 auf, die zusammen mit einer hier nicht gezeigten Bodenwand einen nach oben offenen Aufnahmeraum 8 begrenzen, der über eine Zugangsöffnung 9 zugänglich ist. Die vordere Seitenwand 4 weist hier zudem noch einen Seitenwandausschnitt 10 auf, der die Zugänglichkeit zum Aufnahmeraum 8 erleichtert und hier ebenfalls aus Gründen der Einfachheit als Bestandteil der Zugangsöffnung 9 angesehen wird.

Der hier beispielhaft mit Rädern 11 versehene fahrbare Entsorgungsbehälter 3 ist vollständig mittels des Deckels 2 verschließbar, wie dies beispielhaft aus der Seitenansicht der Fig. 2 ersichtlich ist.

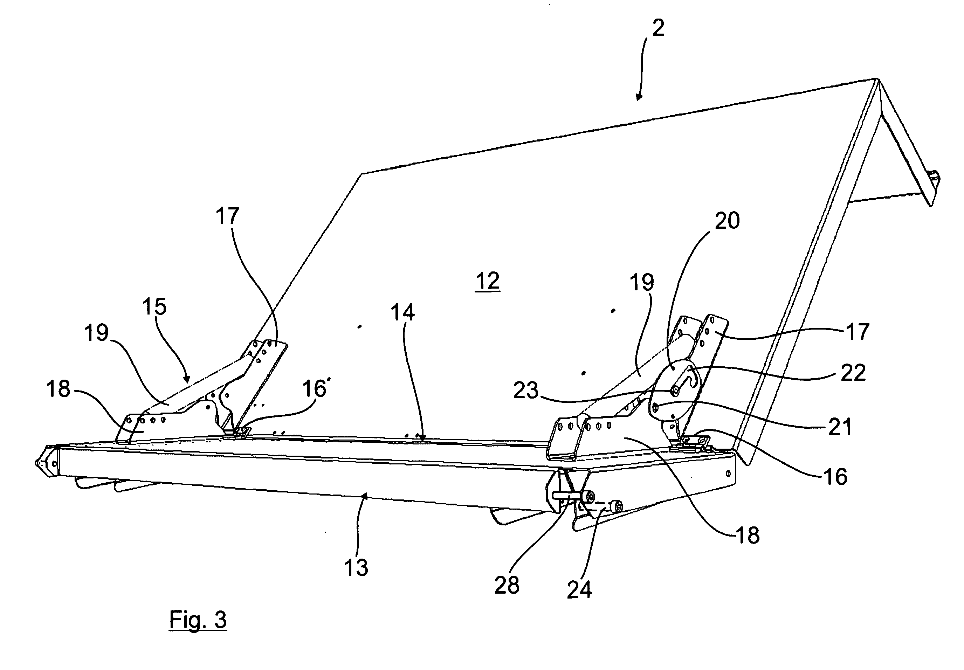

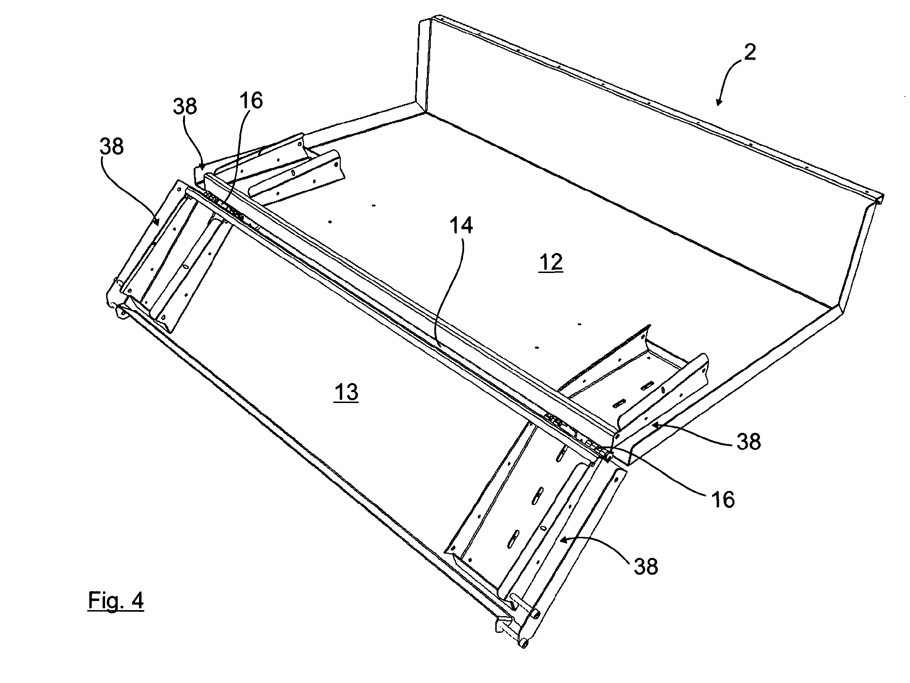

Der insbesondere in den Fig. 3 und 4 dargestellte Deckel 2 besteht aus einem ersten Deckelteil 12, das eine L-Form aufweist und hinsichtlich seiner Abmessungen größer ausgebildet ist als ein zweites Deckelteil 13, das ein Fixier-Deckelteil ausbildet. Die beiden Deckelteile 12, 13 sind in einem Angrenzungsbereich 14 mittels hier beispielhaft zweier Schwenkgelenkeinrichtungen 15 verbunden, so dass die beiden Deckelteile 12, 13 in noch zu beschreibender Weise relativ zueinander um eine entlang des Angrenzungsbereiches 14 verlaufende Schwenkachse verschwenkbar sind.

Zu den beiden Schwenkgelenkeinrichtungen 15 gehört jeweils wenigstens eine Scharnieranordnung 16, über die die beiden Deckelteile 12, 13 schwenkbar miteinander verbunden sind.

Die Schwenkgelenkeinrichtungen 15 umfassen darüber hinaus aber auch jeweils zwei Gelenkbeschläge 17, 18, die jeweils einem der Deckelteile 12, 13 zugeordnet sind und mit diesem fest verbunden sind. An jedem der beiden Gelenkbeschläge 17, 18 der Schwenkgelenkeinrichtungen 15 greift hier als Zugkraftelement eine lediglich schematisch und beispielhaft dargestellte Zugfeder 19 an, die so ausgelegt ist, dass diese sowohl auf das erste Deckelteil 12 als auch auf das zweite Deckelteil 13 eine in Richtung aufeinander zu bzw. in Richtung Offenstellung der Deckelteile 13 gerichtete Zugkraft ausübt.

Die Gelenkbeschläge 17, 18 jeder Schwenkgelenkeinrichtung 15 sind des Weiteren über eine bevorzugt zu beiden Seiten jeder Zugfeder 19 angeordnete Schwenkplatte 20 miteinander gekoppelt, wobei diese Schwenkplatte 20 an dem Gelenkbeschlag 18 um eine Schwenkachse 21 schwenkbar angelenkt ist. Die Schwenkplatte 20 weist eine Führungskulisse 22 auf, in die ein Schwenkzapfen 23 des anderen Gelenkbeschlages 17 zwangsgeführt eingreift.

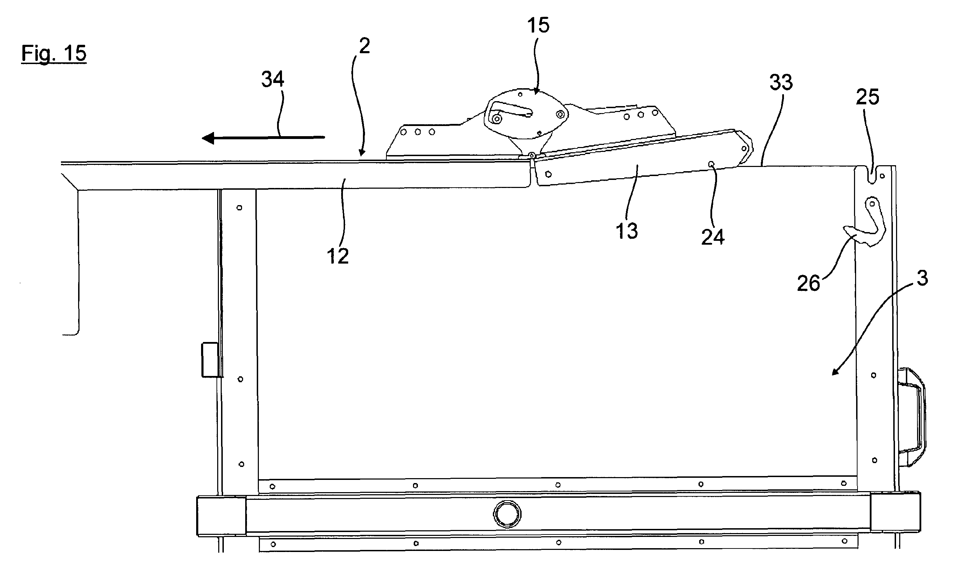

Wie dies insbesondere aus der Fig. 3 weiter ersichtlich ist, weist das zweite Deckelteil 13, welches hier das Fixier-Deckelteil ausbildet, am dem Angrenzungsbereich 14 gegenüberliegenden und damit dem ersten Deckelteil 12 abgewandten Endbereich ein hier zylinderstabförmiges Rastelement 24 auf, das bevorzugt als zylindrische Rolle ausgebildet ist. Dieses Rastelement 24 wirkt im in der Fig. 2 gezeigten fixierten Zustand des Fixier-Deckelteils 13 mit dem Behälter mit einer behälterseitigen Rastnut 25 als Rastgegenelement zusammen (siehe Fig. 15) und bildet zusammen mit dem schwenkbar an der Behälterseitentwand angelenkten Rasthaken 26 eine Fixiereinrichtung 27 zur lösbaren Fixierung des zweiten Deckelteils 13 und damit des Deckels 2 am Behälter aus. Im in der Fig. 2 gezeigten fixierten Zustand des Deckels 2 bzw. des zweiten Deckelteils 13 ist der Rasthaken 26 (im Gegensatz zu der Darstellung der Fig. 15) dergestalt nach oben verschwenkt, dass er das Rastelement 24 formschlüssig umgreift und in Rasteingriff mit der Rastnut 25 hält.

Jedem der beiden Rastelemente 24 am zweiten Deckelteil 13 als Fixier-Deckelteil ist ferner noch ein Abstützelement 28 zugeordnet, dessen Funktionsweise später noch näher beschrieben wird.

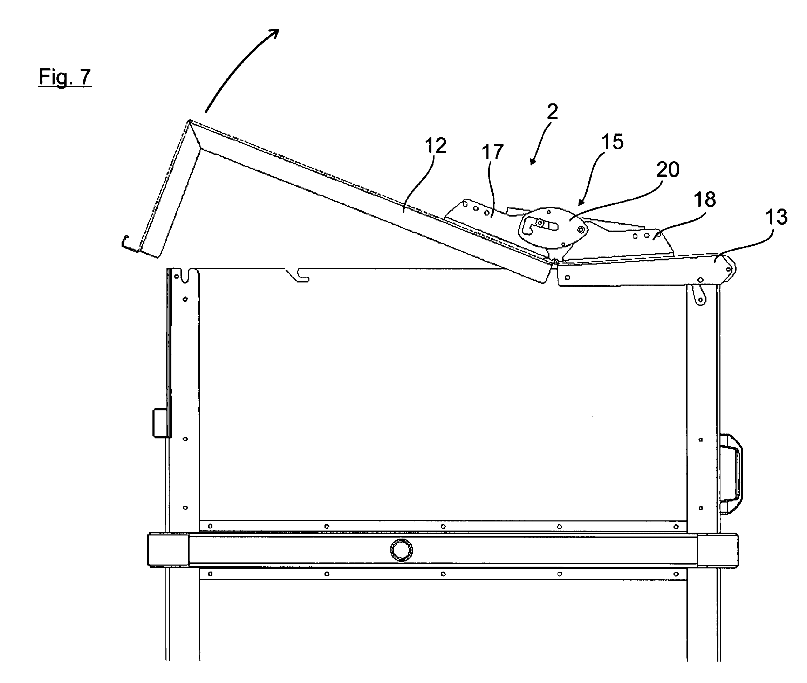

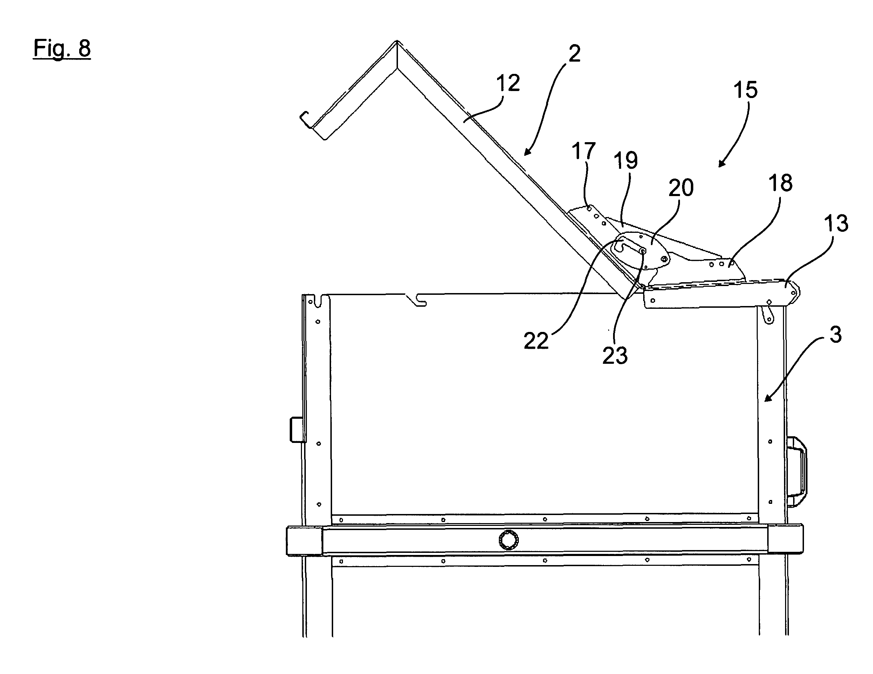

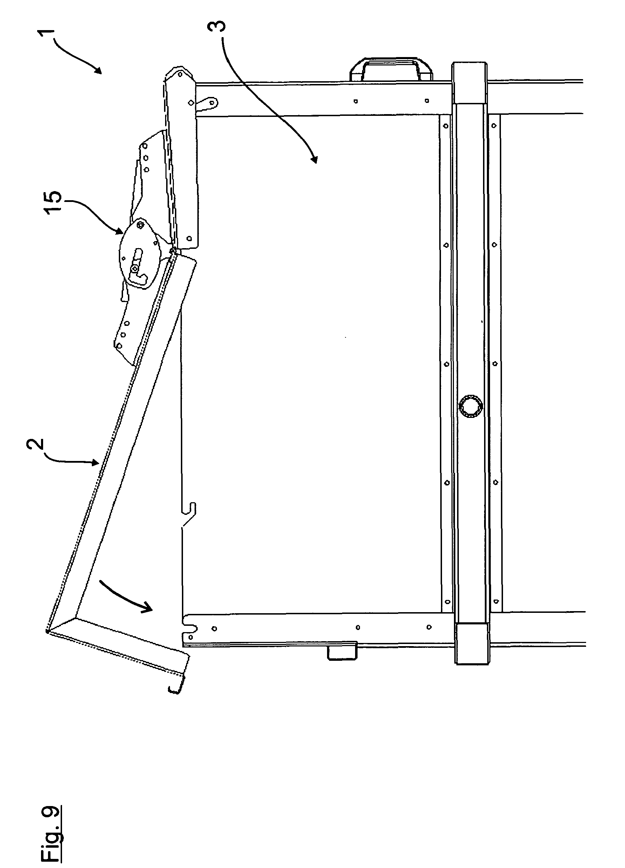

Wie dies nunmehr aus der Fig. 1 ersichtlich ist, kann für einen Zugang zum Aufnahmeraum 8 des Entsorgungsbehälters 3 der größere erste Deckelteil 12 aufgrund der Schwenkgelenkeinrichtungen 15 klappenartig nach oben aufgeschwenkt werden, wie dies ausgehend von der Geschlossenstellung in der Fig. 5 stufenweise in den Fig. 7 bis 8 dargestellt ist. Der maximale Aufschwenkwinkel wird dabei durch ein in etwa Deckellängsrichtung verlaufendes Führungskulissenteil 29 begrenzt, das so gegen die Längsrichtung des Deckels geneigt ist, dass der Führungszapfen 23 die Schwenkplatte 20 beim Aufschwenken des ersten Deckelteils 12 zur Vermeidung einer Kollision zwischen dem Aufschwenken des Deckelteils 12 und der Schwenkplatte ebenfalls nach oben aufschwenkt. Das Führungskulissenteil 29 bildet dann ferner einen endseitigen Anschlag für den Führungszapfen 23 auf, der den maximalen Aufschwenkwinkel (Fig. 8) definiert und begrenzt. Damit ist sichergestellt, dass das erste Deckelteil 12 nicht beliebig weit nach oben aufschwenken kann und somit, was insbesondere bei mannshohen Entsorgungsbehältern 3 von Vorteil ist, von den zuständigen Werkern einfach wieder ergriffen werden kann und wie dies in den Fig. 9 bis 10 dargestellt ist, wieder in seine Geschlossenstellung überführt werden kann, in der das erste Deckelteil 12 im Wesentlichen dicht am zugeordneten, die Zugangsöffnung 9 definierenden Behälterrandbereich anliegt.

Durch die Zugkraft der Zugfeder 19 wird das aufgeschwenkte Deckelteil 12 funktionssicher in der aufgeschwenkten Position gehalten. Beim Abschwenken muss der Werker das Deckelteil 12 wieder gegen die Kraft der Zugfeder 19 nach unten ziehen, wobei bei Überschreiten eines definierten Totpunktes die Gewichtskraft des Deckelteils 12 größer ist als die Zugkraft der Zugfeder 19 und das Deckelteil 12 dadurch mehr oder weniger selbsttätig in die Schließstellung übergeht.

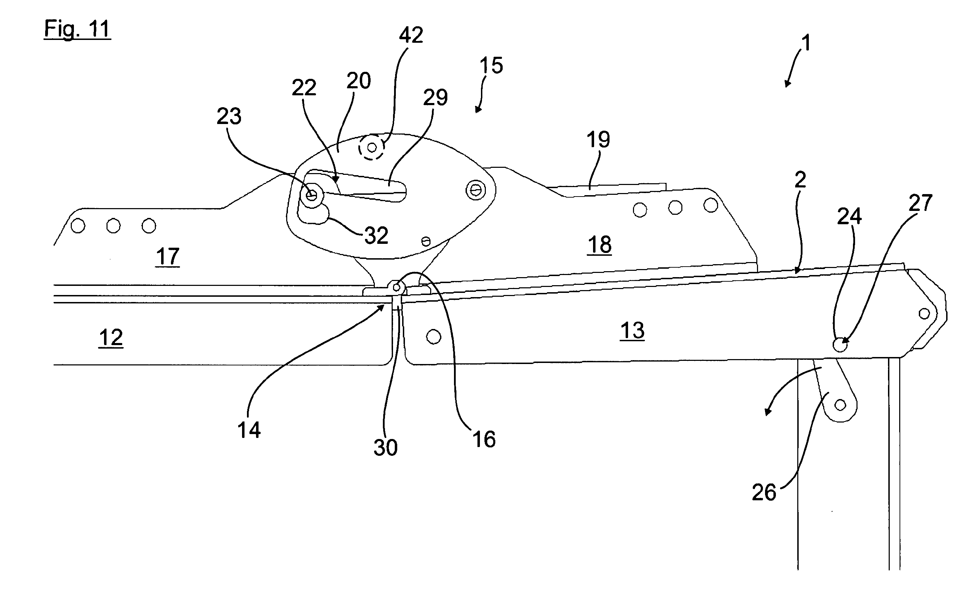

In der Fig. 11 ist einer vergrößerten Detailansicht gezeigt, dass im Angrenzungsbereich 14 zwischen den beiden Deckelteilen 12, 13 ein Dicht- und/oder Dämpfungselement 30 angeordnet sein kann, das den Spaltbereich zwischen den beiden Deckelteilen 12, 13 abdichtet und/oder, insbesondere bei Deckelteilen aus Metall bzw. Leichtmetall oder Blech, für einen klapperfreien Aufbau und ein klapperfreies Verschwenken sorgt.

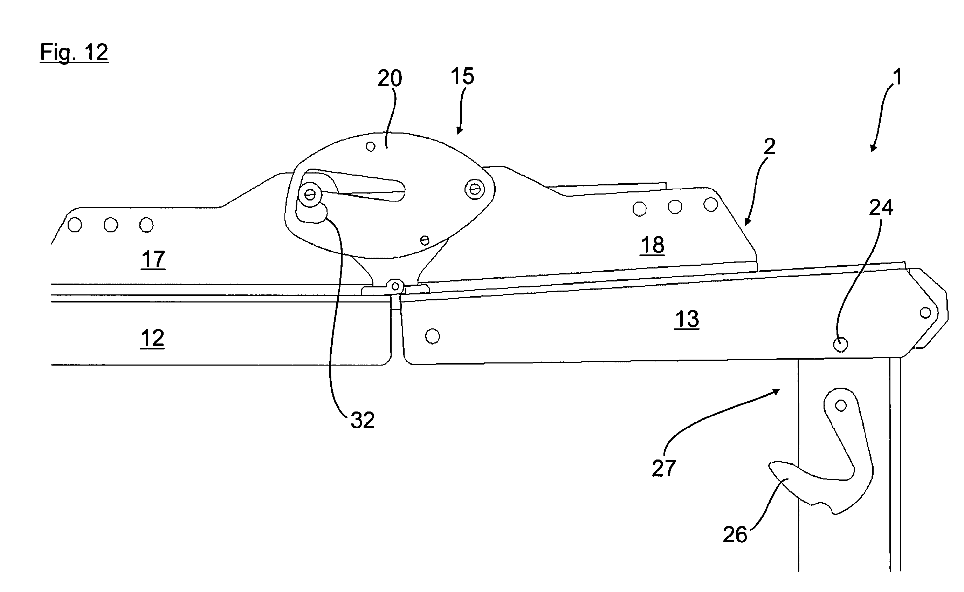

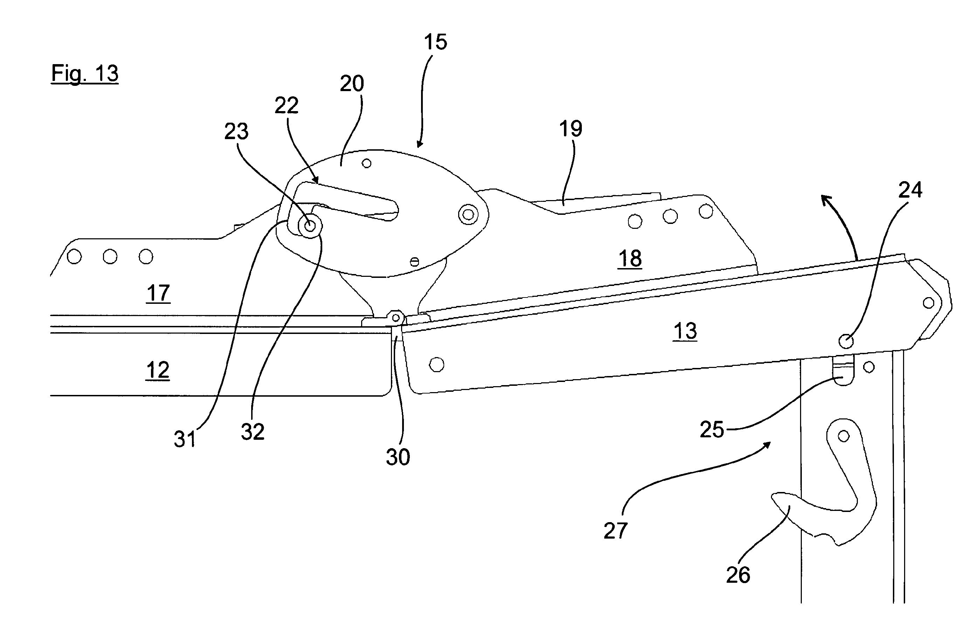

Wie dies weiter aus der Zusammenschau der Fig. 11 bis 13 ersichtlich ist, kann nunmehr, ausgehend von dieser Geschlossenstellung des Deckels 2 die Fixiereinrichtung 27 zum Abnehmen des Deckels 2 dadurch gelöst werden, dass in einem ersten Schritt der Rasthaken 26 außer Eingriff mit dem Rastelement 24 gebracht wird, wodurch das zweite Deckelteil 13, das hier das Fixier-Deckelteil ausbildet, entsprechend des Pfeils in der Fig. 13 angehoben werden kann, wodurch das Rastelement 24 außer Eingriff mit der Rastnut 25 gelangt. Durch die Zugkraft der Zugfeder 19 kann dabei sichergestellt werden, dass das zweite Deckelteil 13 in der in der Fig. 13 gezeigten aufgeschwenkten Position gehalten wird. In diesem Zusammenhang ist es von besonderem Vorteil, wenn die Führungskulisse 22 der Schwenkplatte 20 ein weiteres, in etwa senkrecht verlaufendes Führungskulissenteil 31 aufweist, das eine führungskulissenseitige Rastnut 32 aufweist, in die der Führungszapfen 23 im aufgeschwenkten Zustand des zweiten Deckelteils 13 einrastet, wodurch das zweite Deckelteil 13 besonders funktionssicher außer Eingriff mit der Fixiereinrichtung 27 gehalten ist. Der Deckel ist nunmehr bereit zum Abheben, was nachfolgend anhand der Fig. 15 ff. näher erläutert wird. Bevor dieses Abheben des Deckels 2 jedoch näher erläutert wird, soll nochmals explizit darauf hingewiesen werden, dass zum Verriegeln des zweiten Deckelteils 13 mittels der Fixiereinrichtung 27 es lediglich erforderlich ist, das zweite Deckelteil 13 entgegen die Kraft der Zugfeder 19 nach unten in Richtung Behälter bzw. in Richtung Rastnut 25 zu drücken, wodurch der Führungszapfen 23 außer Eingriff mit der Rastnut 32 gelangt und zudem mittels des Rasthakens 26 das Rastelement 24 in der Rastnut 25 gesichert werden kann. Der Führungszapfen 23 befindet sich dann in der zum Beispiel in der Fig. 12 gezeigten mittleren Stellung innerhalb der Führungskulisse 22, die gleichzeitig eine Indikatorstellung für die Schließstellung des Deckels 2 ausbildet. Für einen klapperfreien Aufbau kann hier vorgesehen sein, dass der Führungszapfen 23 mittels einer definierten Klemmkraft formschlüssig in dieser definierten Mittelstellung innerhalb der Führungskulisse 22 gehalten ist, wobei die Klemmkraft hier vorzugsweise so definiert und ausgelegt ist, dass diese einfachst überdrückt werden kann.

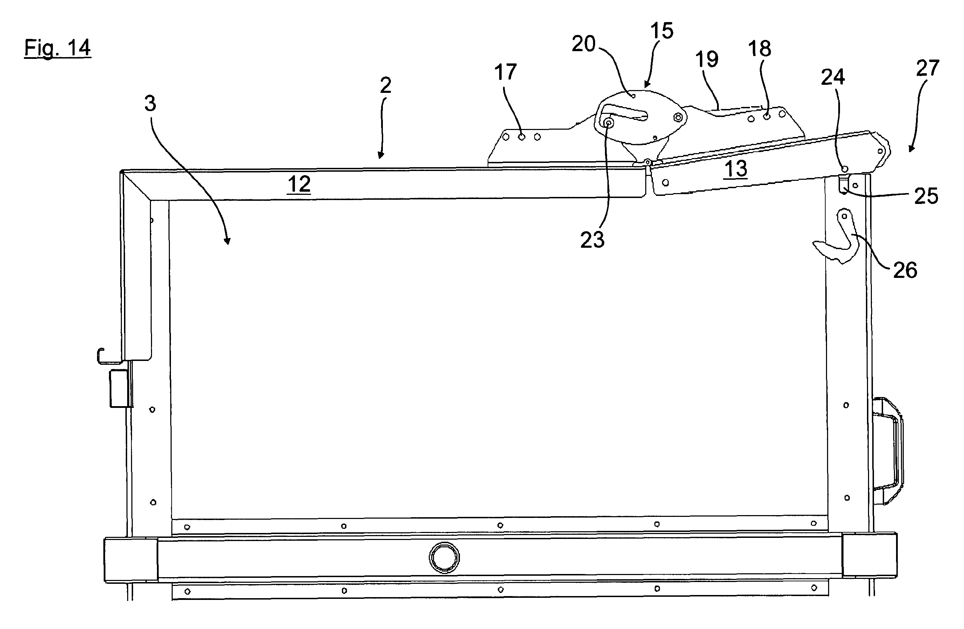

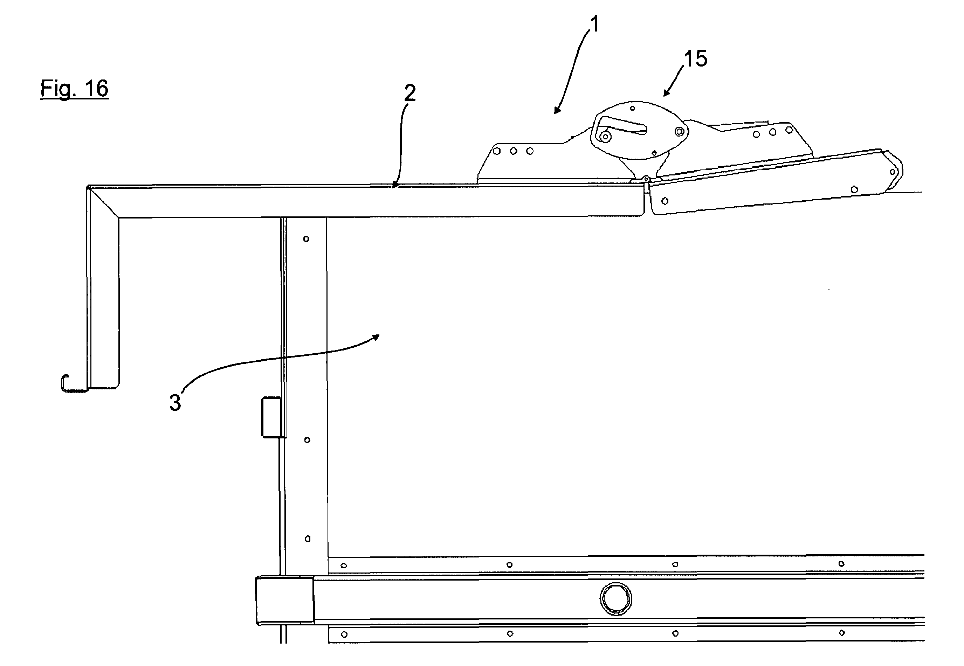

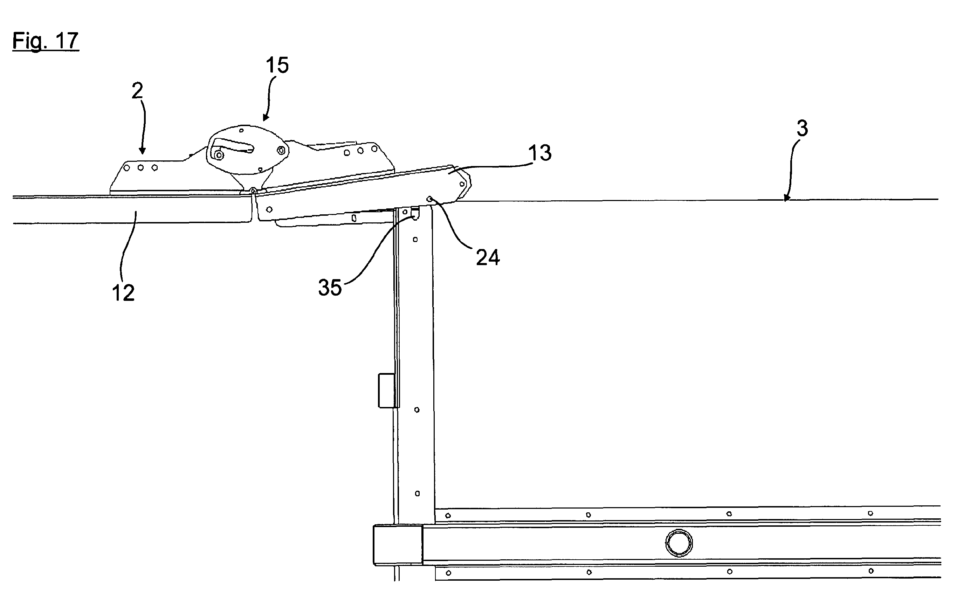

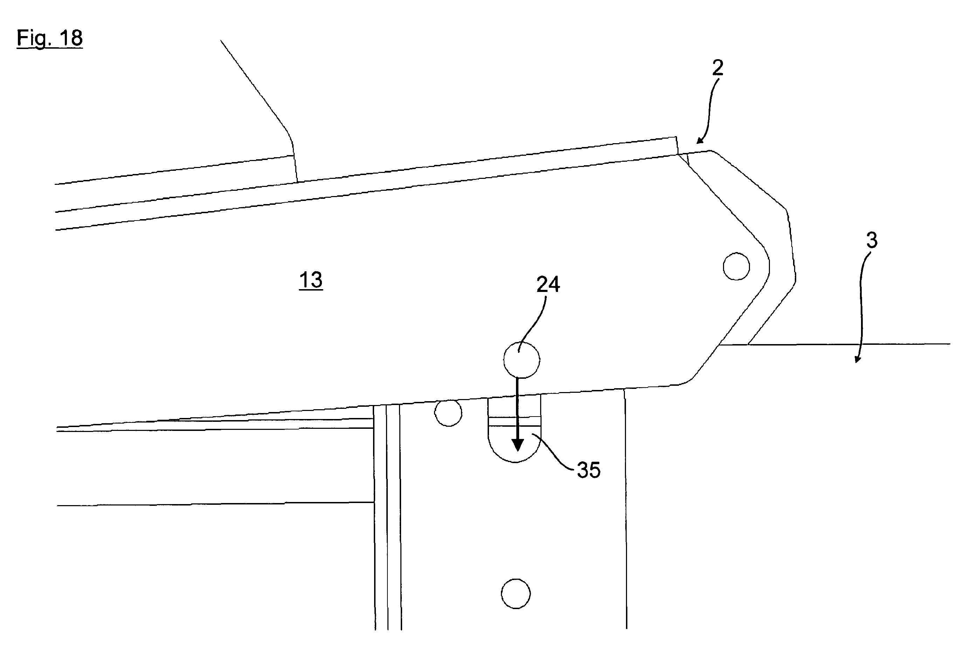

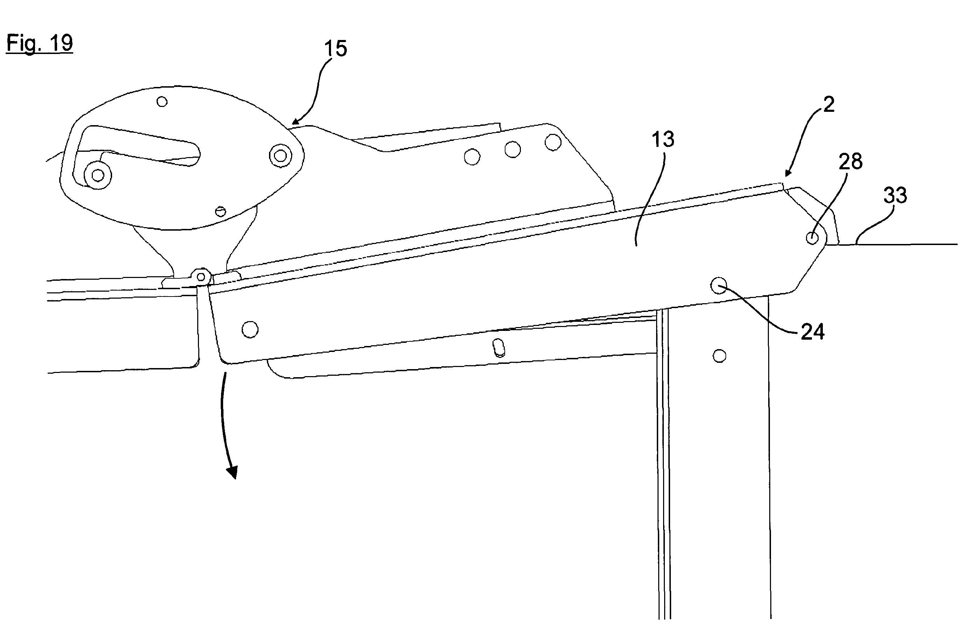

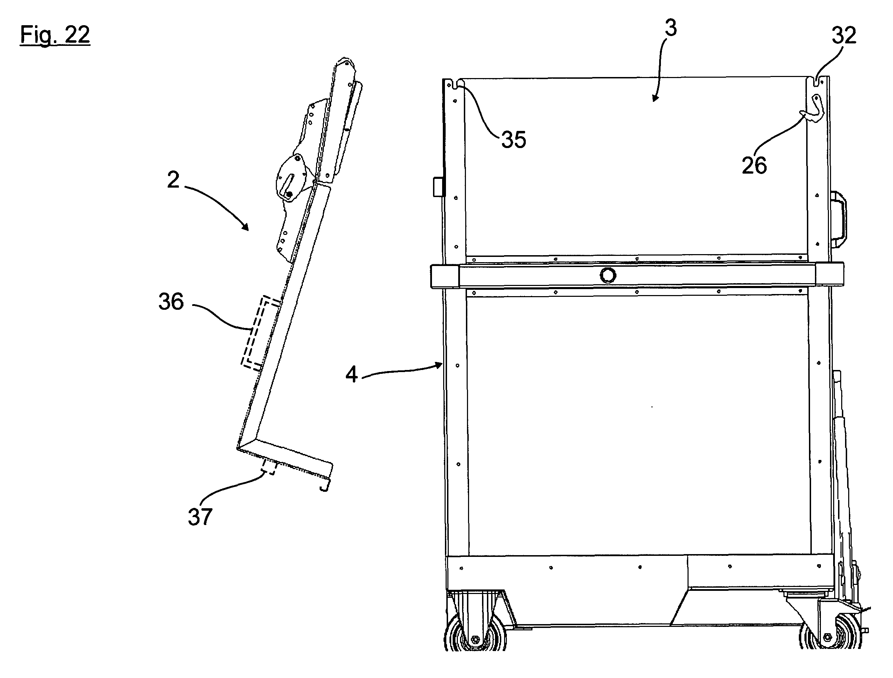

Wie bereits zuvor angekündigt, soll nunmehr anhand der Fig. 14 ff. das Abheben des Deckels 2 näher erläutert werden. In der Fig. 14 befindet sich das zweite Deckelteil 13 in der in der Fig. 13 im Detail gezeigten angehobenen Stellung, bei der das Rastelement 24 funktionssicher außerhalb eines Rasteingriffs mit der Rastnut 25 gehalten ist. In dieser Position liegt der Deckel 2 insbesondere mit seinem ersten Deckelteil 12 in einer Anlageverbindung auf dem die Zugangsöffnung 9 begrenzenden Behälterwand-Randbereich 33 auf, so dass der Deckel 2 vom Werker entlang des Pfeils 34 schienenartig geführt nach vorne vom Entsorgungsbehälter 3 und dessen Zugangsöffnung 9 weg verlagert werden kann (vergleiche auch Fig. 16). Gelangt der so abgezogene Deckel 2 dann am der Rastnut 25 gegenüberliegenden vorderen Behälterbereich in den Bereich einer weiteren Rastnut 35, wie dies in den Fig. 17 und 18 schematisch dargestellt ist, kann das Rastelement 24 in diese Rastnut 35 eingreifen und dann anschließend der gesamte Deckel 2 entsprechend der Fig. 19 bis 21 um diese im Wesentlichen durch die Rastnut 35 und das Rastelement 24 gebildete Schwenkachse nach vorne unten in den Bereich der Seitenwand 4 des Entsorgungsbehälters 3 abgeschwenkt werden. In dieser abgeschwenkten Position kann der Deckel 2 von einem hier nicht dargestellten Werker sehr leicht von vorne, zum Beispiel an den in der Fig. 22 lediglich schematisch und strichliert dargestellten Handgriffen 36, von denen bevorzugt in die Bildebene hinein zwei voneinander beabstandet an der Deckeloberseite angeordnet sind, ergriffen werden und der Deckel 2 an eine vorbestimmte Position verbracht werden.

In der Fig. 22 ist ferner noch ein stirnseitiger Handgriff 37 gezeigt, der zum Beispiel dort ebenfalls zu Transportzwecken angeordnet sein kann oder aber auch lediglich als Zuzieh- und Öffenhilfe vorgesehen sein kann.

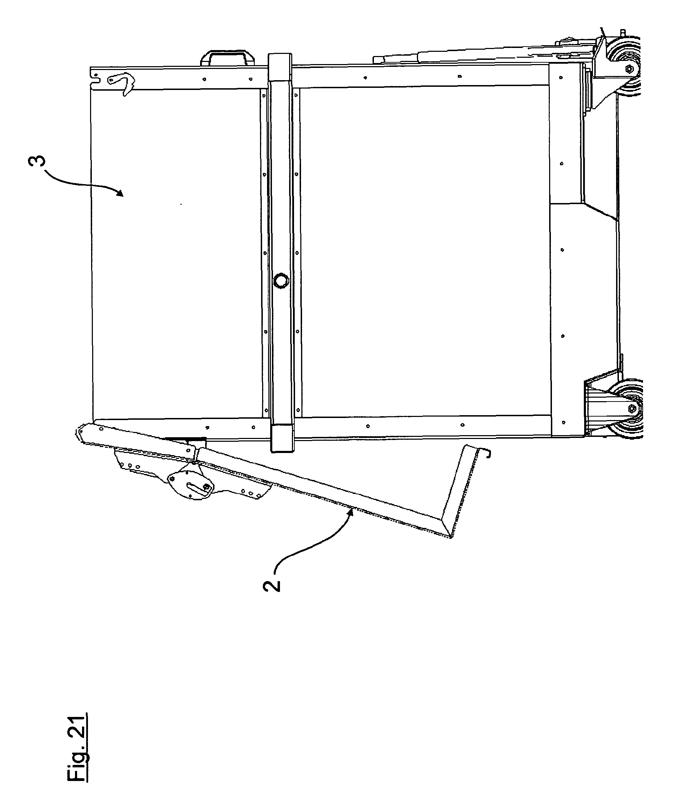

Soll nunmehr der Deckel wieder in umgekehrter Weise auf den Entsorgungsbehälter 3 aufgesetzt werden, wird zuerst das Rastelement 24 am zweiten Deckelteil 13 in Rasteingriff mit der vorderen Rastnut 35 gebracht, anschließend der gesamte Deckel aus der in der Fig. 21 gezeigten abgeschwenkten Position wieder nach oben in die in der Fig. 19 gezeigte, in etwa horizontale Position aufgeschwenkt, und zwar solange, bis das Abstützelement 28 in eine Anlage am Behälterwand-Randbereich 33 gelangt (Fig. 19), wodurch dann sichergestellt ist, dass bei einer weiteren Aufschwenkbewegung des Deckels 2 das Rastelement 24 wieder außer Eingriff mit der Rastnut 25 gelangt und der Deckel 2 in umgekehrter Weise, wie zuvor beschrieben, nach hinten in Richtung Rastnut 32 verschoben werden kann, und zwar solange bis das Rastelement 24 wieder in die Rastnut 32 eingreift und dort mittels des Rasthakens 26 verriegelt werden kann.

Wird das Rastelement 24 als Wälzkörper ausgebildet, zum Beispiel in der Art eines Wälzkörpers eines Nadellagers dann kann dadurch auf einfach Weise ein leichtgängiges Verfahren des Deckels 2 auf dem Behälterwand-Randbereich 33 sichergestellt werden.

Wie dies insbesondere aus der Fig. 4, die eine Unteransicht des Deckels 2 zeigt, ersichtlich ist, ist das zweite Deckelteil 13 bzw. das erste Deckelteil 12 wenigstens teilweise dort mit einem U-förmigen Querschnittsprofil ausgebildet, wo der Deckel 2 am Behälterwand-Randbereich 33 aufliegt und schienenartig verfahren werden soll. Dies erleichtert zum einen das Verfahren und zum anderen das Aus- und Einfädeln des Deckels am Behälter und gewährleistet somit ein funktionssicheres schnelles Montieren ebenso wie ein funktionssicheres schnelles Abmontieren des Deckels 2.

Es versteht sich, dass auf quer zur Schieberichtung des Deckels 2 gegenüberliegenden Behälterseiten bevorzugt jeweils eine Fixiereinrichtung 17 und jeweils eine vordere Rastnut 35 angeordnet ist bzw. sind.

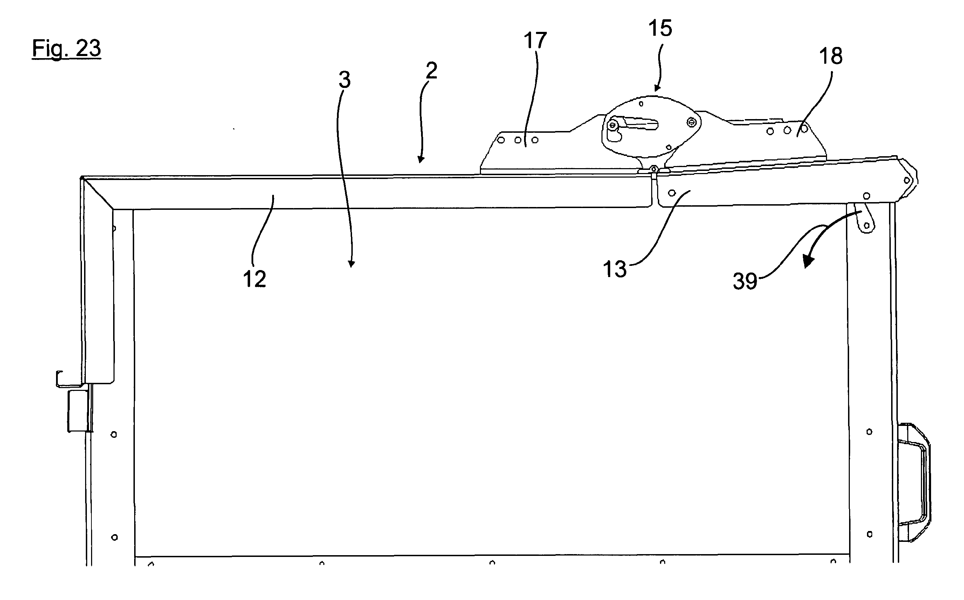

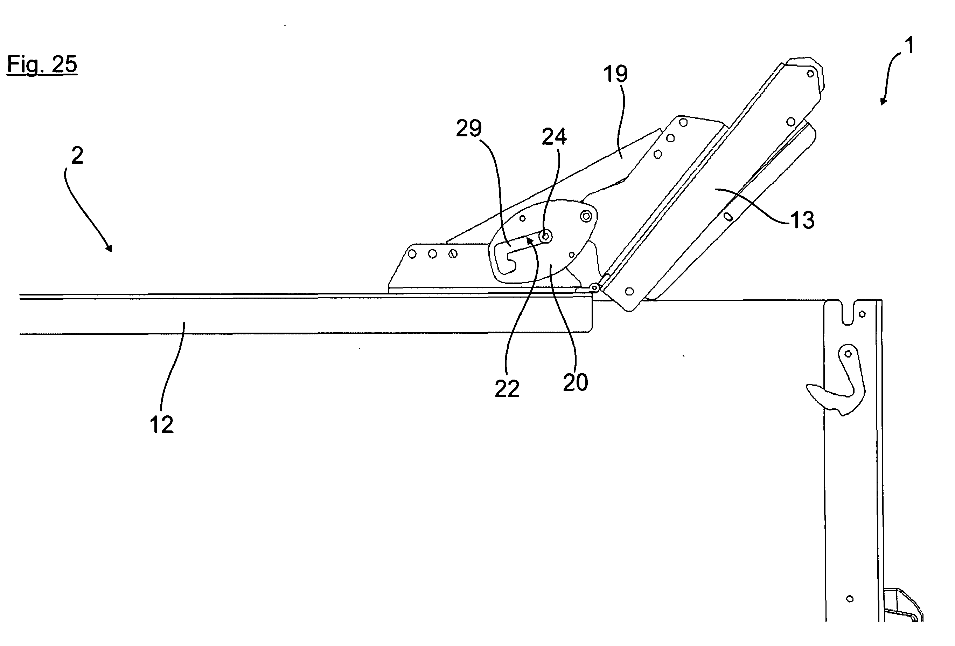

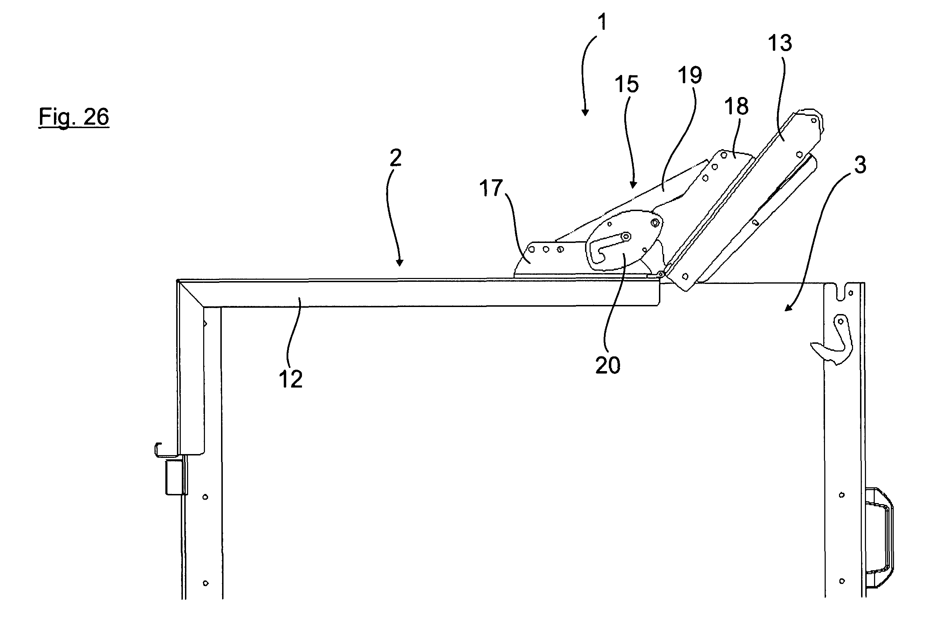

In der Fig. 23 ff. ist nunmehr eine andere Abnahmevariante des Deckels 2 gezeigt, gemäß der der Deckel 2 ausgehend von der in der Fig. 23 gezeigten Schließstellung in einem ersten Schritt wieder durch Lösen der Fixiereinrichtung 27 dadurch zur Abnahme vorbereitet wird, dass der Rasthaken 26 entsprechend des Pfeils 39 in der Fig. 23 in dessen Nicht-Schließstellung verschwenkt wird. Anschließend wird dann das zweite Deckelteil 13 entsprechend des Pfeils 40 solange nach oben verschwenkt, bis der Führungszapfen 23 in dem Führungsteil 29 der Schwenkplatte 20 endseitig zum Anschlag gelangt. In dieser Stellung wird dann das zweite Deckelteil 13 durch die Zugkraft der Zugfeder 19 gehalten (Fig. 25 und 26).

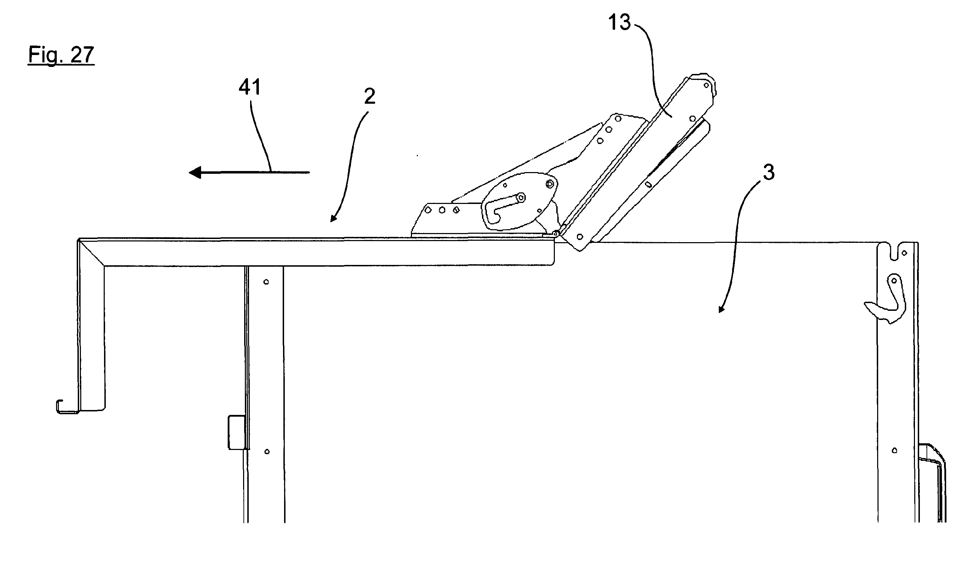

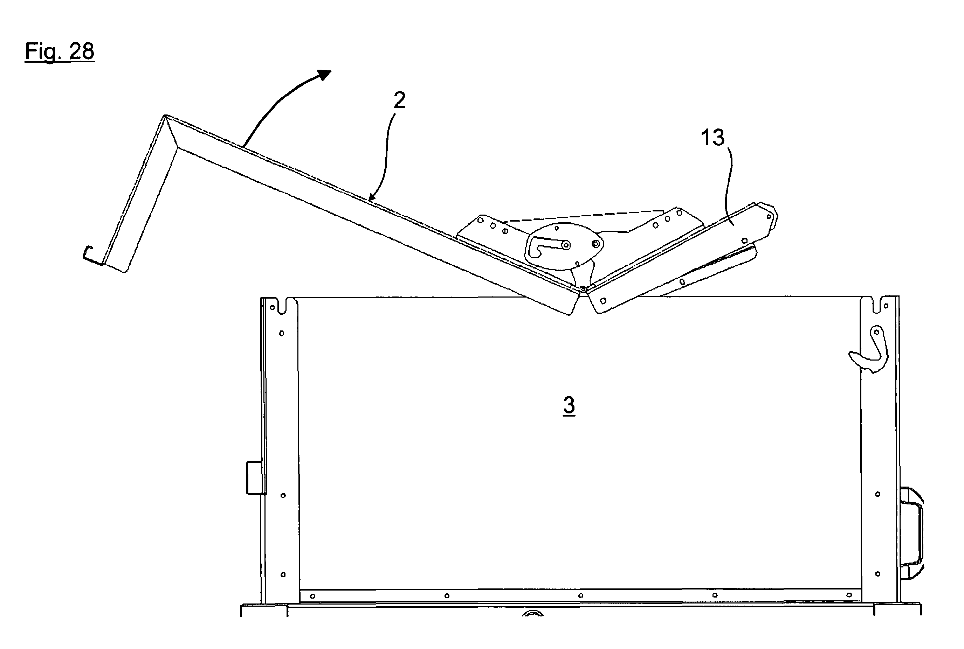

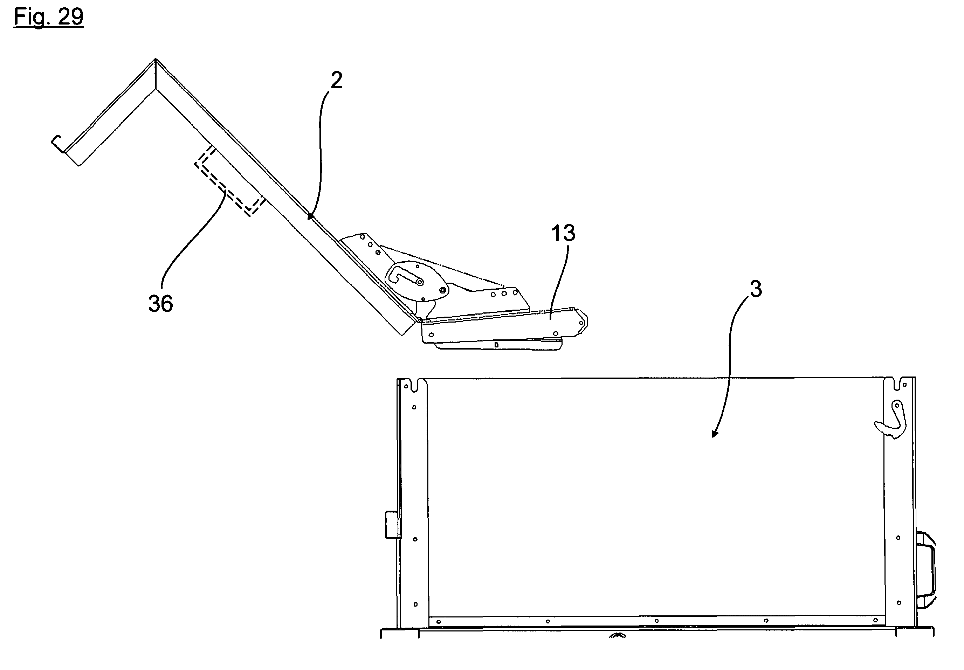

Anschließend wird dann entsprechend des Pfeils 41 in der Fig. 27 der Deckel 2 entlang des Behälterwand-Randbereichs 33 in der zuvor geschilderten Art und Weise nach vorne gezogen sowie anschließend (Fig. 28) nach oben aufgeschwenkt und über Kopf (Fig. 29) abgehoben, wozu wiederrum an der Deckelunterseite Handgriffe 36 angeordnet sein können.

Das Aufsetzen kann hier wieder analog in umgekehrter Weise erfolgen.

Um das Aufschwenken des Deckels 2 im Sinne der Darstellung der Fig. 28 und 29 zu ermöglichen, ist es hier gegebenenfalls erforderlich, das zweite Deckelteil 13 weiter aufzuschwenken als dies bei der in den Fig. 11 bis 14 gezeigten Abhebevariante der Fall ist. Es versteht sich, dass die Geometrie der Führungskulisse entsprechend an die jeweilige Abhebefunktion entsprechend anzupassen ist. Wie die Darstellung und Erläuterung der beiden Abhebevarianten zeigt, macht es gegebenenfalls Sinn, an der Schwenkplatte 20 ein in der Fig. 11 lediglich äußerst schematisch dargestelltes Handgriffelement 22 anzuordnen, mittels dem bei der Aufschwenkbewegung des zweiten Deckelteils 13 vom Werker handbetätigt unterstützend sichergestellt wird, dass durch entsprechende Schwenkverlagerung der Schwenkplatte 20 der Führungszapfen 23 entweder in den oberen Führungskulissenteil 29 oder in den unteren Führungskulissenteil 31 eingreift.

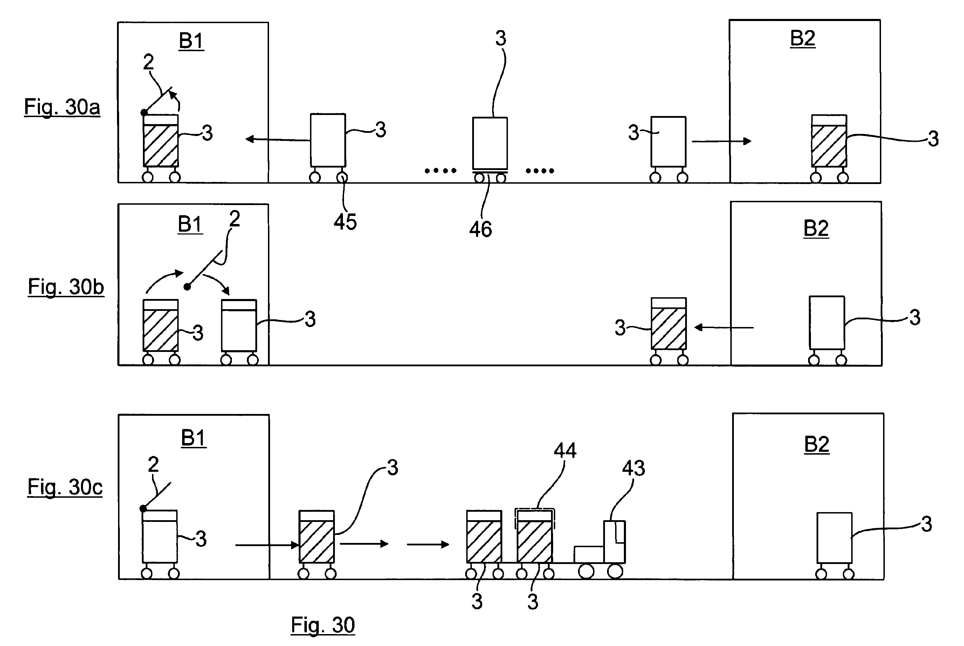

In den Fig. 30a bis 30c ist nunmehr schematisch und beispielhaft sowie prinzipiell die erfindungsgemäße Verfahrensführung anhand von zwei unterschiedlichen ortsfesten Bearbeitungsstationen B1 und B2 gezeigt, an denen jeweils zu entsorgendes Material anfällt, wobei das an der Bearbeitungsstation B1 anfallende zu entsorgende Material zum Beispiel äußerst geruchsintensiv ist, so dass dort ein Entsorgungsbehälter 3 mitsamt Deckel 2 vorzusehen ist, während an der Bearbeitungsstation B2 dagegen kein geruchsintensives Material anfällt, so dass dort ein Entsorgungsbehälter 3 ohne Deckel vorgesehen werden kann.

Sind zum Beispiel an den Entsorgungsstationen B1 und B2 die beiden Entsorgungsbehälter 3 gefüllt, wird von einem Entsorgungsdienstleister die Abholung organisiert und findet ein Behälteraustausch an den jeweiligen Bearbeitungsstationen B1 und B2 statt. Wie dies insbesondere aus der Fig. 30a ersichtlich ist, können die Entsorgungsbehälter 3 hier allesamt im Wesentlichen gleich aufgebaut sein, solange sie allesamt eine baugleiche Aufnahmevorrichtung für die lösbare Montage des Deckels 2 aufweisen. Dementsprechend können beliebige entleerte bzw. leere Entsorgungsbehälter 3 in den Bereich der Bearbeitungsstationen B1 und B2 verbracht werden und gegen den dort mit zu entsorgendem Material gefüllten Behälter ausgetauscht werden. Die Befüllung der Entsorgungsbehälter ist hier lediglich beispielhaft und schematisch mit einer Kreuzschraffur dargestellt. Es versteht sich, dass der Entsorgungsbehälter 3 an der Bearbeitungsstation B1 mit dem Deckel 2 mehr oder weniger geruchsdicht verschlossen ist, um eine Geruchsbelästigung im Bereich der Bearbeitungsstation B1 für einen Werker bzw. für die Umgebung der Bearbeitungsstation B1 zu vermeiden.

Im Rahmen des Austausches der vollen Entsorgungsbehälter 3 wird dann an der Bearbeitungsstation B1 der lösbar montierte abnehmbare Deckel 2 (Fig. 30b) von dem vollen Entsorgungsbehälter 3 abgenommen und entsprechend auf dem leeren Entsorgungsbehälter 3 montiert (Fig. 30c), so dass dieser wieder zu einer Befüllung mit zu entsorgendem Material bereitsteht, und zwar wiederum mitsamt einem Deckel zum Verschließen des Behälters.

Der Austausch des vollen Entsorgungsbehälters 3 gegen einen leeren Entsorgungsbehälter 3 erfolgt dagegen an der Bearbeitungsstation B2 lediglich durch einfachen Austausch; eine Deckelmontage ist hier nicht vorgesehen und auch nicht möglich.

Die vollen Entsorgungsbehälter 3 werden zum Beispiel über eine Zugmaschine 43 (äußerst schematisch dargestellt in der Fig. 30c) im Schleppverband zu einer hier nicht dargestellten Entsorgungseinrichtung entfernt von den Bearbeitungsstationen B1 und B2 verfahren und dort entleert. Nach dem Entleeren können diese wieder in beliebiger Reihenfolge an die unterschiedlichen Bearbeitungsstationen verbracht werden.

Um im Bereich der Behälteröffnung eine Transportsicherung für das darin gelagerte und aufgenommene Material sicherzustellen, können diese mit einer in der Fig. 30c lediglich strichliert dargestellten Abdeckung, zum Beispiel einer Abdeckplane oder einer Abdeckfolie oder dergleichen versehen sein, die um die Behälteröffnung herum gespannt wird. Diese Abdeckung 44 kann beispielsweise entweder am Zugfahrzeug 43 selbst mitgeführt werden oder aber auch unmittelbar an jedem Behälter angeordnet sein, zum Beispiel dort verstaut sein und/oder ausziehbar sein.

Um die Entsorgungsbehälter zu den einzelnen Bearbeitungsstationen verfahren zu können, weisen diese, wie dies in der Fig. 30a bis 30c lediglich äußerst schematisch dargestellt ist, zum Beispiel unmittelbar an dem Entsorgungsbehälter 3 angeordnete Räder 45 auf. Alternativ dazu können die Entsorgungsbehälter 3 aber auch räderlos ausgebildet sein, wie dies ebenfalls in der Fig. 30a im mittleren Bereich dargestellt ist. In diesem Fall sind die Entsorgungsbehälter 3 dann auf verfahrbaren Trailern 46 angeordnet.

## Patentansprüche

1. Verfahren zur Entsorgung von Abfällen, insbesondere von Montageabfällen im Produktions- und/oder Fertigungsbereich von Industrieunternehmen, insbesondere von eine Serienfertigung aufweisenden Industrieunternehmen,
mit einer Mehrzahl von ortsfesten, voneinander beabstandeten Bearbeitungsstationen B1, B2), an denen zu entsorgendes Material anfällt,
wobei einem ersten Teil der ortsfesten Bearbeitungsstationen (B1) jeweils wenigstens ein, eine Befüllöffnung aufweisender Abfall- und/oder Entsorgungsbehälter (3) mit einem Deckel (2) zugeordnet ist, mittels welchem Deckel (2) eine Befüllöffnung des Behälters (3) verschließbar ist, und
wobei einem zweiten Teil der ortsfesten Bearbeitungsstationen (B2) jeweils wenigstens ein, eine Befüllöffnung aufweisender Abfall- und/oder Entsorgungsbehälter (3) ohne Deckel zum Verschließen der Befüllöffnung zugeordnet ist,
**dadurch gekennzeichnet,**
**dass** sämtliche Abfall- und/oder Entsorgungsbehälter (3) wenigstens bezüglich einer behälterseitigen Aufnahmevorrichtung für einen abnehmbaren Deckel (2), mit dem die Befüllöffnung im montierten Zustand des Deckels (2) verschließbar ist, baugleich ausgebildet sind, wobei wenigstens ein, insbesondere eine Mehrzahl von abnehmbaren Deckeln (2) vorgesehen ist, die wenigstens im Hinblick auf ihre lösbare Verbindung mit den behälterseitigen Aufnahmevorrichtungen ebenfalls baugleich ausgebildet sind,
**dass** an lediglich dem ersten Teil der ortsfesten Bearbeitungsstationen (B1) jeweils wenigstens ein abgenommener Deckel (2) vorgesehen und/oder angeordnet ist, dergestalt,
- **dass** in einem ersten Schritt wenigstens ein beliebiger der leeren Abfall- und/oder Entsorgungsbehälter (3) an die jeweiligen ortsfesten Bearbeitungsstationen (B1, B2) verbracht und dort gegen wenigstens einen mit zu entsorgendem Material befüllten, abzuholenden Abfall- und/oder Entsorgungsbehälter (3) ausgetauscht wird, wobei an denjenigen ortsfesten Bearbeitungsstationen (B1), an denen der wenigstens eine Abfall- und/oder Entsorgungsbehälter (3) mit einem Deckel (2) verschließbar ist, der Deckel (2) von dem wenigstens einen abzuholenden Abfall- und/oder Entsorgungsbehälter (3) abgenommen und auf dem wenigstens einen leeren Abfall- und/oder Entsorgungsbehälter (3) montiert wird, so dass der an der Bearbeitungsstation (B1) verbleibende wenigstens eine Abfall- und/oder Entsorgungsbehälter (3) zu den Zeiten, zu denen keine Behälterbefüllung mit einem zu entsorgendem Material erfolgt, mittels des aufmontierten Deckels (2) verschließbar ist,
- **dass** die abgeholten Abfall- und/oder Entsorgungsbehälter (2) zu einer Entsorgungseinrichtung verbracht werden, an der diese entleert werden, und
- **dass** weiter die entleerten Abfall- und/oder Entsorgungsbehälter (3) in beliebiger Reihenfolge an die ortsfesten Bearbeitungsstationen (B1, B2), insbesondere unabhängig davon, ob an diesen eine Deckel (2) angeordnet ist oder nicht, verbringbar sind oder verbracht werden.

2. Verfahren nach Anspruch 1, **dadurch gekennzeichnet, dass** die Abfall- und/oder Entsorgungsbehälter (3) während der Fahrt von den Bearbeitungsstationen (B1, B2) weg und/oder zu den Bearbeitungsstationen (B1, B2) hin mittels einer Abdeckung, insbesondere einer folien- und/oder planenartigen und/oder netzartigen Abdeckung (44), abdeckbar sind, die in ihrer Nicht-Gebrauchsposition vorzugsweise am Zugfahrzeug (43) und/oder am jeweiligen Behälter (3) verstaut ist.

3. Verfahren nach Anspruch 1 oder 2, **dadurch gekennzeichnet, dass** die Behälter (3) selbst verfahrbar ausgebildet sind oder auf verfahrbaren Trailern (46) angeordnet sind, wobei mehrere Behälter (3) oder im Falle von auf Trailern (46) aufgesetzten Behältern (3) auch mehrere Trailer (46) während der Fahrt von den Bearbeitungsstationen (B1, B2) weg und/oder zu den Bearbeitungsstationen (B1, B2) hin zu einem Zugverband zusammengekoppelt und von einem Zugfahrzeug (43) gezogen werden.

4. Entsorgungseinrichtung zur Durchführung eines Verfahrens nach einem der vorhergehenden Ansprüche, **dadurch gekennzeichnet, dass** eine Mehrzahl von eine Befüllöffnung aufweisenden und zu Bearbeitungsstationen (B1, B2) verbringbaren Abfall- und/oder Entsorgungsbehältern (3) vorgesehen ist, die sämtlich wenigstens bezüglich ihrer behälterseitigen Aufnahmevorrichtung für einen abnehmbaren Deckel (2), mit dem die Befüllöffnung im montierten Zustand des Deckels (2) verschließbar ist, baugleich ausgebildet sind, und dass weiter wenigstens ein, insbesondere eine Mehrzahl von abnehmbaren Deckeln (2) vorgesehen ist, die wenigstens im Hinblick auf ihre lösbare Verbindung mit den behälterseitigen Aufnahmevorrichtungen ebenfalls baugleich ausgebildet sind.

5. Entsorgungseinrichtung nach Anspruch 4, **dadurch gekennzeichnet, dass** der abnehmbare Deckel (2) im am Abfall- und/oder Entsorgungsbehälter (3) montierten Zustand eine Deckelanordnung nach einem der Ansprüche 7 bis 21 ausbildet oder durch einen Deckel nach einem der Ansprüche 7 bis 21 gebildet ist.

6. Entsorgungseinrichtung nach Anspruch 4 oder 5, **dadurch gekennzeichnet, dass** mehrere Räder (7) beabstandet voneinander an einer Unterseite wenigstens eines Teils der Abfall- und/oder Entsorgungsbehälter angeordnet sind oder dass wenigstens ein Teil der Abfall- und/oder Entsorgungsbehälter zum Transport auf fahrbare Trailer aufgesetzt ist.

7. Deckelanordnung an einem Behälter, insbesondere an einem fahrbaren und/oder mittels einer Hub- und/oder Kippvorrichtung entleerbaren Abfall- und/oder Entsorgungsbehälter und/oder insbesondere für die Abfall- und/oder Entsorgungsbehälter nach einem der Ansprüche 1 bis 6,
wobei der Behälter (3) wenigstens eine Behälterwand (4, 5, 6, 7) aufweist, die wenigstens einen nach oben offenen und über eine Zugangsöffnung (9) zugänglichen Aufnahmeraum (8) umgibt und/oder begrenzt, der mittels eines Deckels (2) verschließbar ist,
**dadurch gekennzeichnet,**
**dass** der Deckel (2) abnehmbar und mehrteilig ausgebildet ist und wenigstens zwei in einem Angrenzungsbereich (14) aneinandergrenzende Deckelteile (12, 13) aufweist, die mittels wenigstens einer Schwenkgelenkeinrichtung (15) relativ zueinander verschwenkbar ausgebildet sind, wobei wenigstens eines der relativ zueinander verschwenkbaren Deckelteile (13) als Fixier-Deckelteil mittels wenigstens einer Fixiereinrichtung (17) lösbar am Behälter (3) festlegbar ist,
**dass** bei einem mittels der Fixiereinrichtung (17) am Behälter (3) festgelegten Deckelteil (13), das wenigstens eine andere Deckelteil (12) zur Freigabe der Zugangsöffnung (9) aufschwenkbar ist, und
**dass** bei gelöster Fixiereinrichtung (17) der Deckel (2) insgesamt vom Behälter (3) abnehmbar ist.

8. Deckelanordnung nach Anspruch 7, **dadurch gekennzeichnet, dass** die wenigstens eine Schwenkgelenkeinrichtung (15) eine Halteeinrichtung (19) aufweist, die wenigstens ein in die geöffnete Stellung verschwenktes Deckelteil (12, 13) in der Offenstellung hält, wobei bevorzugt vorgesehen ist, dass die wenigstens eine Schwenkgelenkeinrichtung (15) eine Halteeinrichtung (19), vorzugsweise eine einzige Halteeinrichtung (19), aufweist, die im Angrenzungsbereich (14) an beiden einander zugeordneten Deckelteilen (12, 13) angreift und das wenigstens eine Deckelteil (12, 13) im aufgeschwenkten und/oder geöffneten Zustand in dessen Offenstellung hält und/oder die eine Zugkraft auf das wenigstens eine Deckelteil (12, 13) in Richtung dessen Offenstellung ausübt.

9. Deckelanordnung nach Anspruch 8, **dadurch gekennzeichnet, dass** die Halteeinrichtung (19) durch ein Zugkraftelement (19), vorzugsweise durch ein im Angrenzungsbereich an den einander zugeordneten Deckelteilen (12, 13) angreifendes Zugkraftelement (19) gebildet ist, wobei bevorzugt vorgesehen ist, dass das Zugkraftelement (19) durch eine Zugfeder gebildet ist, die in einer, in Abhängigkeit von einem Aufschwenkwinkel des aufgeschwenkten Deckelteils (12, 13) definierten Übertotpunktstellung eine Zugkraft auf das Deckelteil (12, 13) ausübt, die größer ist als die das Deckelteil (12, 13) in die Schließstellung ziehende Gewichtskraft des Deckelteils, so dass das Deckelteil in der Offenposition gehalten ist, wobei bevorzugt vorgesehen ist, dass die Zugfeder (19) in einer Untertotpunktstellung eine Zugkraft auf das Deckelteil (12, 13) ausübt, die kleiner ist als die das Deckelteil (12, 13) in die Schließstellung ziehende Gewichtskraft des Deckelteils (12, 13) und/oder die kleiner ist als eine das Deckelteil (12, 13) in der Schließstellung haltende Fixierkraft, so dass das Deckelteil (12, 13) in der Schließstellung verbleibt.

10. Deckelanordnung nach einem der Ansprüche 7 bis 9, **dadurch gekennzeichnet, dass** jedem der Deckelteile (12, 13) im Angrenzungsbereich (14) derselben ein Bestandteil der Schwenkgelenkeinrichtung (15) bildender Gelenkbeschlag (17, 18) zugeordnet ist,
dass an einem ersten der Gelenkbeschläge (18), der einem ersten Deckelteil (13) zugeordnet ist, ein, eine Führungskulisse (22) aufweisendes Schwenkelement (20), insbesondere eine Schwenkplatte, schwenkbar angelenkt ist, und
dass in die Führungskulisse (22) des Schwenkelementes (20) ein Führungszapfen (23) des zweiten der Gelenkbeschläge (17), der einem zweiten Deckelteil (12) zugeordnet ist, eingreift und darin zwangsgeführt ist.

11. Deckelanordnung nach Anspruch 8 und Anspruch 10, **dadurch gekennzeichnet, dass** an den Gelenkbeschlägen (17, 18) die vorzugsweise durch ein Zugkraftelement, höchst bevorzugt durch ein Federelement, gebildete Halteeinrichtung (19) angreift und/oder angebunden ist.

12. Deckelanordnung nach einem der vorhergehenden Ansprüche 7 bis 11, **dadurch gekennzeichnet, dass** das wenigstens eine mittels der Fixiereinrichtung (17) lösbar am Behälter (3) festlegbare Fixier-Deckelteil (13) ein Rastelement (24) aufweist, das im fixierten Zustand des Deckelteils (13) mit einem behälterseitigen Rastgegenelement (25) zusammenwirkt, und
dass das Rastelement (24) bei gelöster Fixiereinrichtung (17) und aufgeschwenktem Fixier-Deckelteil (13) außer Eingriff mit dem Rastgegenelement (25) ist, wobei bevorzugt vorgesehen ist, dass die Schwenkgelenkeinrichtung (15) so ausgebildet ist, dass das Fixier-Deckelteil (13) im aufgeschwenkten Zustand mittels einer Halteeinrichtung (19), vorzugsweise mittels der Halteeinrichtung gemäß Anspruch 8 oder 9 in der Offenstellung gehalten ist.

13. Deckelanordnung nach einem der Ansprüche 10 bis 12, **dadurch gekennzeichnet, dass** der Führungszapfen (23) in der aufgeschwenkten Stellung des Fixier-Deckelteils (13) in eine führungskulissenseitige Rastnut (32) einrastet, aus der der Führungszapfen (23) beim Abschwenken des Fixier-Deckelteils (13) in Richtung dessen Schließstellung wieder ausrastet.

14. Deckelanordnung nach einem der Ansprüche 7 bis 13, **dadurch gekennzeichnet, dass** der Deckel (2) bei gelöster Fixiereinrichtung (17) und/oder aufgeschwenktem Fixier-Deckelteil (13) auf dem die Zugangsöffnung (9) begrenzenden und/oder definierenden Behälterwand-Randbereich (33) in einer Anlage- und Gleitverbindung aufliegt und/oder sich dort abstützt und entlang des eine Art Führungsschiene ausbildenden Behälterwand-Randbereichs (33) zur Freigabe der Zugangsöffnung (9) verlagerbar und/oder verschiebbar und/oder verfahrbar ist.

15. Deckelanordnung nach einem der Ansprüche 12 bis 14, **dadurch gekennzeichnet, dass** dem fixierdeckelseitigen Rastelement (24) im, in Abhebe- und/oder Verschieberichtung endseitigen und/oder dem behälterseitigen Rastgegenelement (25) gegenüberliegenden vorderen Behälterbereich wenigstens ein weiteres behälterseitiges Rastgegenelement (35), vorzugsweise jeweils ein weiteres Rastgegenelement (35) auf in Querrichtung gegenüberliegenden vorderen Behälterseiten, zugeordnet ist, in das das Rastelement (24) am Ende des Verlagerungsweges dergestalt einhängbar ist, dass der gesamte Deckel (2) um diesen Einhängebereich als Schwenkachse, in Hochachsenrichtung des Behälters (3) gesehen, verschwenkbar ist, insbesondere nach unten abschwenkbar ist.

16. Deckelanordnung nach einem der Ansprüche 10 bis 15, **dadurch gekennzeichnet, dass**
a) die Führungskulisse (22) einen, in der Schließstellung des Deckels (2) in etwa in Deckellängsrichtung verlaufenden Führungskulissenteil (29) aufweist, der so gegen die Deckelebene bzw. Deckel-Längsrichtung geneigt ist, dass der Führungszapfen (23) das Schwenkelement (20) beim Aufschwenken des jeweiligen Deckelteils (12, 13), vorzugsweise des den Führungszapfen (23) tragenden Deckelteils, ebenfalls aufschwenkt,
und/oder
b) die Führungskulisse (22) einen in der Schließstellung des Deckels (2) in etwa senkrecht ausgerichteten Führungskulissenteil (31) aufweist, der so gegen die Hochachse geneigt ist, dass das Schwenkelement (20) am Ende des Schließvorgangs des Deckelteils (12, 13), insbesondere des den Führungszapfen tragenden Deckelteils, in eine definierte, bezogen auf die Führungskulisse (22) mittlere und/oder nicht endseitige Position verlagert ist.

17. Deckelanordnung nach einem der Ansprüche 7 bis 16, **dadurch gekennzeichnet, dass** der Deckel (2) zweiteilig mit einem ersten bzw. hinteren und einem zweiten bzw. vorderen Deckelteil ausgebildet ist, wobei das erste bzw. hintere Deckelteil (13) als Fixier-Deckelteil mittels der Fixiereinrichtung (17) lösbar am Behälter (3) festlegbar ist und/oder bezüglich seiner Abmessung kleiner ausgebildet ist als das zweite bzw. vordere Deckelteil (12), wobei bevorzugt vorgesehen ist, dass das zweite bzw. vordere Deckelteil (12) eine L-Form aufweist und in der Schließstellung ferner einen im vorderen Seitenwandbereich (4) des bevorzugt rechteckförmigen Behälters (3) ausgebildeten Seitenwandausschnitt (10) abdeckt.
